# EUROPÄISCHE PATENTSCHRIFT

(11) **EP 3 145 938 B1**
(45) Veröffentlichungstag und Bekanntmachung des Hinweises auf die Patenterteilung: **26.12.2018**
(21) Anmeldenummer: 15720942.0
(22) Anmeldetag: 29.04.2015
(51) Int. Cl.: C07F 9/145, C07F 9/6574

(54) **VERFAHREN ZUR HERSTELLUNG VON MONOPHOSPHITEN**
METHOD FOR PRODUCING MONOPHOSPITES
PROCÉDÉ DE PRÉPARATION DE MONOPHOSPHITES

(30) Priorität: 20.05.2014 DE 102014209534; 20.05.2014 DE 102014209532; 20.05.2014 DE 102014209533; 20.05.2014 DE 102014209535; 20.05.2014 DE 102014209536; 16.02.2015 DE 102015202722
(43) Veröffentlichungstag der Anmeldung: 29.03.2017
(73) Patentinhaber: Evonik Degussa GmbH, 45128 Essen (DE)
(72) Erfinder: DYBALLA, Katrin Marie, 45657 Recklinghausen (DE); FRANKE, Robert, 45772 Marl (DE)
(86) Internationale Anmeldenummer: PCT/EP2015/059289
(87) Internationale Veröffentlichungsnummer: WO 2015/176928

(56) Entgegenhaltungen:
- DE-A1- 19 853 748
- DE-A1-102011 085 883
- RUI M B CARRILHO ET AL: "Rhodium/tris-binaphthyl chiral monophosphite complexes: Efficient catalysts for the hydroformylation of disubstituted aryl olefins", JOURNAL OF ORGANOMETALLIC CHEMISTRY, ELSEVIER-SEQUOIA S.A. LAUSANNE, CH, Bd. 698, 5. Oktober 2011 (2011-10-05), Seiten 28-34, XP028392107, ISSN: 0022-328X, DOI: 10.1016/J.JORGANCHEM.2011.10.007 [gefunden am 2011-10-29]
- ROBERT FRANKE ET AL: "Applied Hydroformylation", CHEMICAL REVIEWS, Bd. 112, Nr. 11, 14. November 2012 (2012-11-14), Seiten 5675-5732, XP055091930, ISSN: 0009-2665, DOI: 10.1021/cr3001803 in der Anmeldung erwähnt
- KONSTANTIN N GAVRILOV ET AL: "Phosphites and diamidophosphites based on mono-ethers of BINOL: a comparison of enantioselectivity in asymmetric catalytic reactions", TETRAHEDRON, ELSEVIER SCIENCE PUBLISHERS, AMSTERDAM, NL, Bd. 68, Nr. 5, 28. November 2011 (2011-11-28), Seiten 1581-1589, XP028436933, ISSN: 0040-4020, DOI: 10.1016/J.TET.2011.11.092 [gefunden am 2011-12-06]
- Ana Z Gonzalez ET AL: "Supporting Information Gold(I)-Catalyzed Enantioselective [4+2] Cycloaddition of Allene-Dienes", Org. Lett., 1 January 2009 (2009-01-01), pages S1-S138, XP055490296, Retrieved from the Internet: URL:https://pubs.acs.org/doi/suppl/10.1021 /ol902622b/suppl_file/ol902622b_si_001.pdf [retrieved on 2018-07-05]
- Yasuhito Koyama ET AL: "Regioselective Remote Functionalization of Biaryl Framework via Tethered ortho-Quinol Intermediate", Chemistry - An Asian Journal, vol. 6, no. 2, 1 February 2011 (2011-02-01), pages 355-358, XP055201358, ISSN: 1861-4728, DOI: 10.1002/asia.201000533

## Beschreibung

Die Erfindung betrifft ein Verfahren zur Herstellung von Monophosphiten. Der Ausgangsstoff bei dem Verfahren ist ein Biphenol.

Monophosphite werden beispielsweise als Liganden in der übergangsmetallkatalysierten Hydroaminomethylierung (E. Petricci, A. Mann, J. Salvadori, M. Taddei, Tetrahedron Letters 2007, 48, 8501-8504), der Hydrocyanierung (US 5,449,807), der Hydroformylierung (B. CORNILS, W. A. HERRMANN, "Applied Homogeneous Catalysis with Organometallic Compounds", Vol. 1 & 2, VCH, Weinheim, New York, 1996 bzw. R. Franke, D. Selent, A. Börner, "Applied Hydroformylation", Chem. Rev., 2012, DOI:10.1021/cr3001803), der Isomerisierung (US 5,440,067) und der Cyclohydrocarbonylierung (US 5,962,744) von Olefinen eingesetzt.

Die Synthese dieser phosphorhaltigen Liganden ist in der Literatur mehrfach beschrieben. Einen guten Überblick findet man in "Phosphorous(III)Ligands in Homogeneous Catalysis - Design and Synthesis" von Paul C.J. Kamer und Piet W.N.M. van Leeuwen; John Wiley and Sons, 2012 sowie darin enthaltene Literaturhinweise.

Die Herstellung solcher Liganden bzw. Ligandenklassen und letztlich auch Ligandenbibliotheken sollten sich durch eine einfache und modulare Synthese auszeichnen. Die entsprechenden Edukte sollten außerdem idealerweise kommerziell verfügbar und preiswert sein oder aber sich günstig und einfach herstellen lassen.

Die einfache Verfügbarkeit der Bausteine und damit verbunden die gute Möglichkeit einer großtechnischen Synthese der Monophosphite und letztlich ihres Einsatzes ist ein wichtiges Kriterium, da der Herstellungsaufwand und damit verbunden die anfallenden Kosten nur so hoch sein dürfen, dass die Rentabilität des Gesamtprozesses für den sie verwendet werden, weiterhin gewährleistet ist.

Klassische Phosphine bzw. Bisphosphine erfüllen diese Anforderungen nur bedingt, da die Synthese zumeist über mehrere Stufen verläuft und zum Teil aufwändigen Trennungen und Reinigungsschritte beinhaltet.

Die einfachsten, symmetrisch substituierten Monophosphite sind die des Typs (**I**):

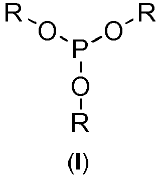

Diese lassen sich sehr leicht durch die Reaktion eines Alkohols mit Phosphortrichlorid (PCl₃) in Gegenwart einer Base und eines Lösungsmittels herstellen (vgl. Schema 1) (siehe "Phosphorous(III) Ligands in Homogeneous Catalysis - Design and Synthesis" von Paul C.J. Kamer und Piet W.N.M. van Leeuwen; John Wiley and Sons, 2012; S.82 ff.). 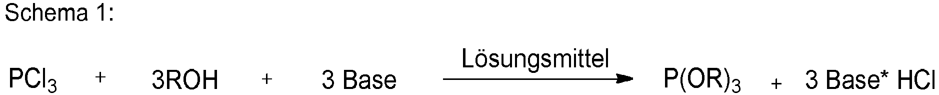 Die Herstellung von unsymmetrisch substituierten Monophosphiten ist aufwendiger, sie ist beispielsweise in DE 199 53 058 beschrieben. Hierbei wird ein Phosphortrihalogenid zunächst mit einem Alkohol unter Erhalt eines Dihalogenophosphorigsäuremonoesters umgesetzt, der wiederum erneut mit einem Alkohol zu einem Monohalogenophosphorigsäurediester umgesetzt wird. Anschließend erfolgt eine weitere Umsetzung mit einem Alkohol zu einem dem entsprechenden Phosphit.

Ein Monophosphit des Typs (**II**) enthält eine zyklische Dioxaphosphoreinheit.

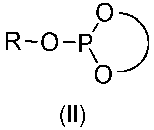

Ein Monophosphit des Typs (**II**) kann auf zwei unterschiedliche Wege hergestellt werde: 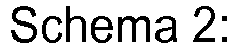 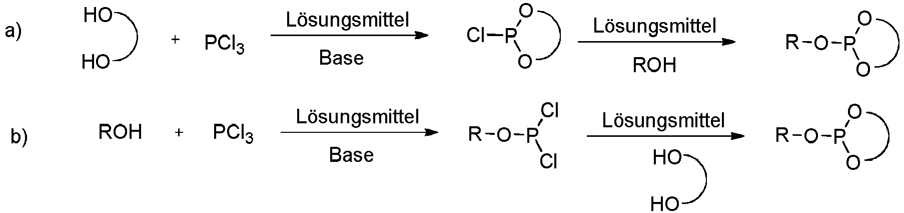 Siehe hierzu auch:
- WO 2007036701;
- P.H. Dussault, K.R. Woller, J. Org. Chem. 1998, 63, 5769;
- M.T. Reetz, G. Mehler, Angew. Chem. Int. Ed. 2000, 39, 3889;
- M. Kawasaki, P. Li, H. Yamamoto, Angew. Chem. Int. Ed. 2008, 47, 3795;
- C.J. Cobley, K. Gardner, J. Klosin, C. Praquin, C. Hill, G.T. Whiteker, A. Zanotti-Gerosa, J.L. Petersen, K.A. Abboud, J. Org. Chem. 2004, 69, 5323.
In RUI M B CARRILHO ET AL, "Rhodium/tris-binaphthyl chiral monophosphite complexes: Efficient catalysts for the hydroformylation of disubstituted aryl olefins", JOURNAL OF ORGANOMETALLIC CHEMISTRY, ELSEVIER-SEQUOIA S.A. LAUSANNE, CH, Bd. 698, (2011-10-05), Seiten 28 - 34, wird ein Verfahren zur Herstellung von tris-Binaphthyl-Monophosphit-Liganden beschrieben. Des Weiteren wird deren Einsatz als Liganden in der Hydroformylierung von Phenylpropen beschrieben.

Gonzalez ET AL: "Supporting Information- Gold(I)-Catalyzed Enantioselective [4+2] Cycloaddition of Allene-Dienes", Org. Lett., 2009, Seiten S1-S138 offenbart die Herstellung C3-symmetrischer Liganden unter Verwendung des Menthlycarbonats von BINOL.

Yasuhito Koyama ET AL: "Regioselective Remote Functionalization of Biaryl Framework via Tethered ortho-Quinol Intermediate", Chemistry - An Asian Journal, Bd. 6, Nr. 2, 2011, Seiten 355-358 offenbart das tert-Butylcarbonat von BINOL.

Diese Monophosphite sind folglich in einer zweistufigen Synthese zugänglich. Dabei wird entweder nach a) das Phosphortrichlorid mit einem geeigneten Diol, wie ein Biphenol oder ein Binaphthol, in Gegenwart einer Base zu einem Phosphorigsäurediesterchlorid umgesetzt. Die weitere Umsetzung zu dem eigentlichen Monophosphit erfolgt durch Reaktion des Phosphorigsäurediesterchlorids mit einem nahezu beliebig wählbaren Alkohol in Gegenwart einer Base.
Oder es wird nach b) das Phosphortrichlorid zunächst mit einem Alkohol in Gegenwart einer Base zu einem Dihalogenophosphorigsäuremonoester umgesetzt, welches dann im nachfolgenden Syntheseschritt mit einem geeigneten Diol zu dem angestrebten Monophosphit umgesetzt wird.
Die Aufgabe der vorliegenden Erfindung bestand darin, ein Verfahren bereitzustellen, mit welchem Monophosphite hergestellt werden können, welche mindestens eine Biphenoleinheit aufweisen. Wobei sich das Verfahren in vorteilhafter Weise von den beiden im Stand der Technik bekannten Routen abheben soll.

Gelöst wird die Aufgabe durch ein Verfahren nach einem der Ansprüche 1, 3 oder 5.

Verfahren umfassend die Verfahrensschritte:
a) 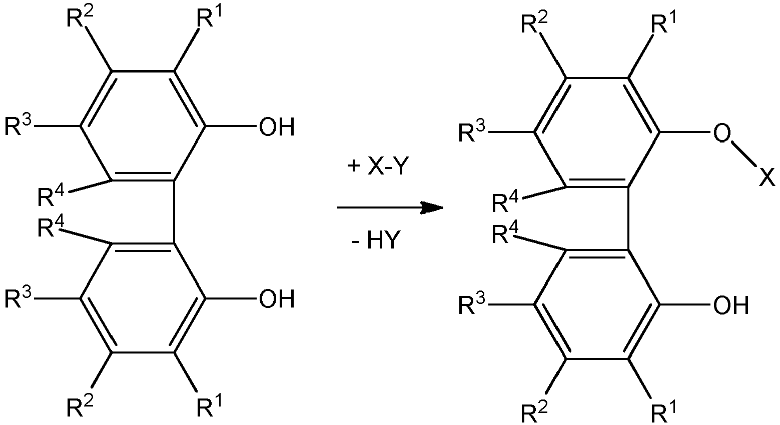
b1) 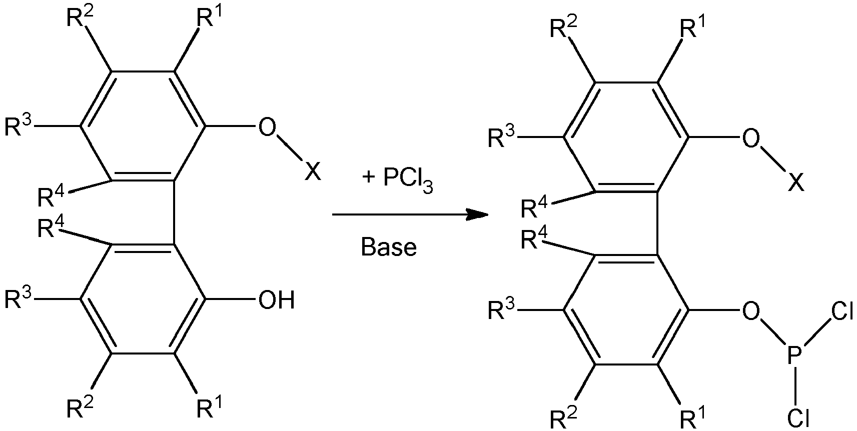
c1) 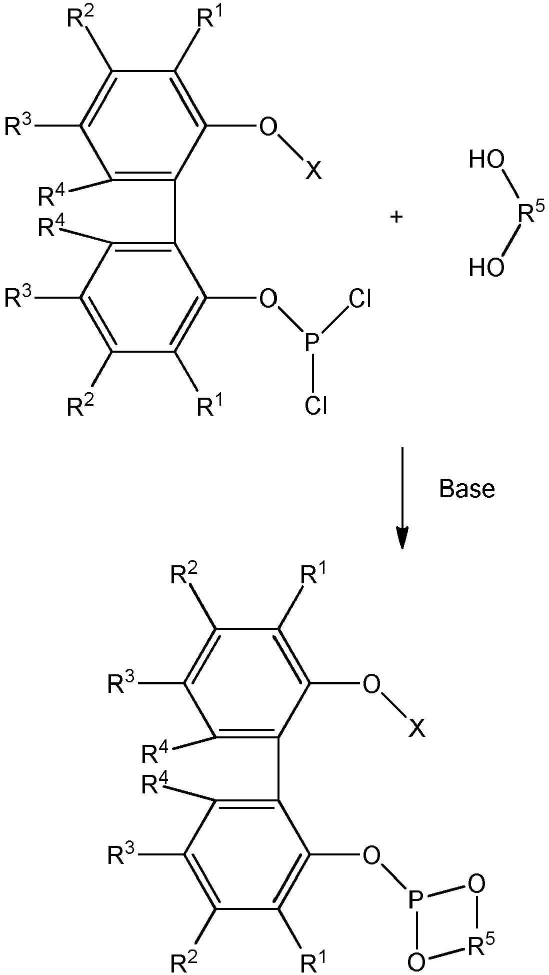 wobei
   R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
   R⁵ ausgewählt ist aus: -(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀ )-Aryl-, -(C₄-C₂₀)-Heteroaryl-, -(C₆-C₂₀ )-Aryl-CO-(C₆-C₂₀)-Aryl-,
   wobei die Arylgruppen auch miteinander verknüpft sein können, sodass R⁵ für ein Biaryl steht;
   X für -COO-*tert*.Butyl steht;
   und Y für ein entsprechendes Gegenion zu X steht;
   wobei bezogen auf das Biphenol nur ein Äquivalent X-Y eingesetzt wird.

Hierbei steht c für cyclo.

(C₁-C₁₂)-Alkyl und O-(C₁-C₁₂)-Alkyl können jeweils unsubstituiert oder durch einen oder mehrere gleiche oder verschiedene Reste substituiert sein, die ausgewählt sind unter (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₃-C₁₂)-Cycloalkyl und (C₃-C₁₂)-Heterocycloalkyl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

(C₆-C₂₀)-Aryl können jeweils unsubstituiert oder durch einen oder mehrere gleiche oder verschiedene Reste substituiert sein, die ausgewählt sind unter (C₁-C₁₂)-Alkyl, (C₁-C₁₂)-Alkoxy, (C₃-C₁₂)-Cycloalkyl, (C₃-C₁₂)-Heterocycloalkyl, (C₆-C₂₀)-Aryl, Fluor, Chlor, Cyano, Formyl, Acyl oder Alkoxycarbonyl.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Diemthylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen. Die Substituenten sind vorzugsweise unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-, -N-, -N(=O)-, -C(=O)- oder -S(=O)-. Beispiele für -(C₃-C₁₂)-Heterocycloalkylgruppen Tetrahydrothiophenyl, Tetrhydrofuryl, Tetrahydropyranyl und Dioxanyl.

Substituierte -(C₃-C₁₂)-Cycloalkylgruppen und substituierte -(C₃-C₁₂)-Heterocycloalkylgruppen können, in Abhängigkeit von ihrer Ringgröße, einen oder mehrere (z.B. 1, 2, 3, 4 oder 5) weitere Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl. Substituierte -(C₃-C₁₂)-Cycloalkylgruppen tragen vorzugsweise eine oder mehrere -(C₁-C₆)-Alkylgruppen. Substituierte -(C₃-C₁₂)-Heterocycloalkylgruppen tragen vorzugsweise eine oder mehrere -(C₁-C₆)-Alkylgruppen.

Der Ausdruck -(C₆-C₂₀)-Aryl umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

Substituierte -(C₆-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter -(C₁-C₁₂)-Alkyl, -(C₁-C₁₂)-Alkoxy, -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Substituierte -(C₆-C₂₀)-Arylgruppen sind vorzugsweise substituierte -(C₆-C₁₀)-Arylgruppen, insbesondere substituiertes Phenyl oder substituiertes Naphthyl oder substituiertes Anthracenyl. Substituierte -(C₆-C₂₀)-Arylgruppen tragen vorzugsweise eine oder mehrere z.B. 1, 2, 3, 4 oder 5 Substituenten, ausgewählt unter -(C₁-C₁₂)-Alkylgruppen, -(C₁-C₁₂)-Alkoxygruppen.

Das oben dargestellte Verfahren stellt die erste von drei erfindungsgemäßen Syntheserouten dar.

Verfahren umfassend die Verfahrensschritte:
a) 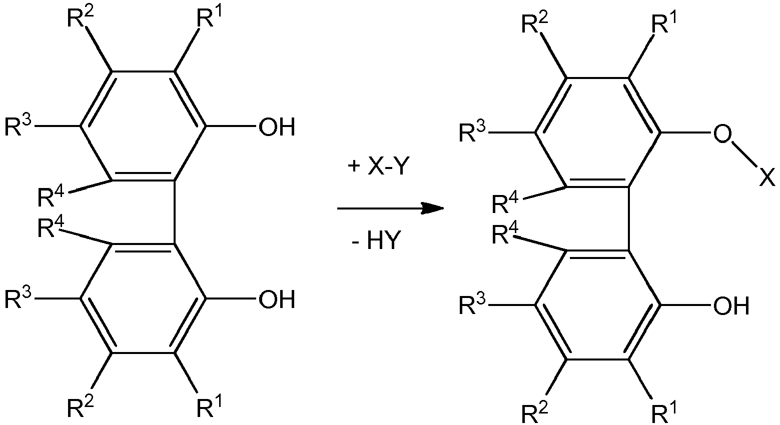
b1) 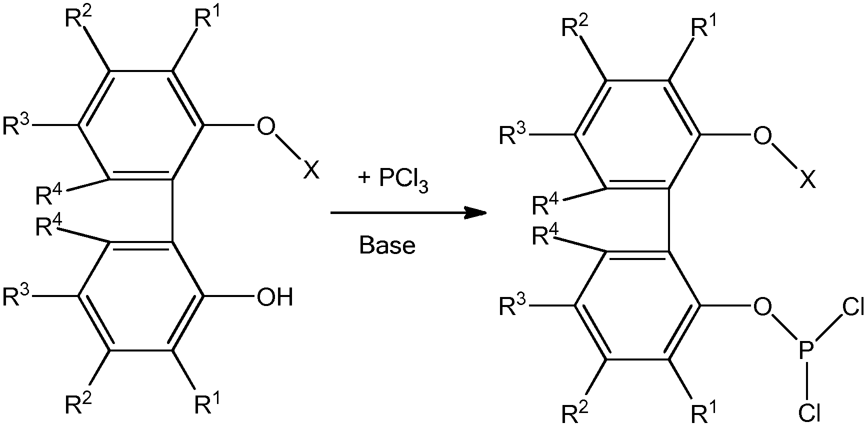
c1') 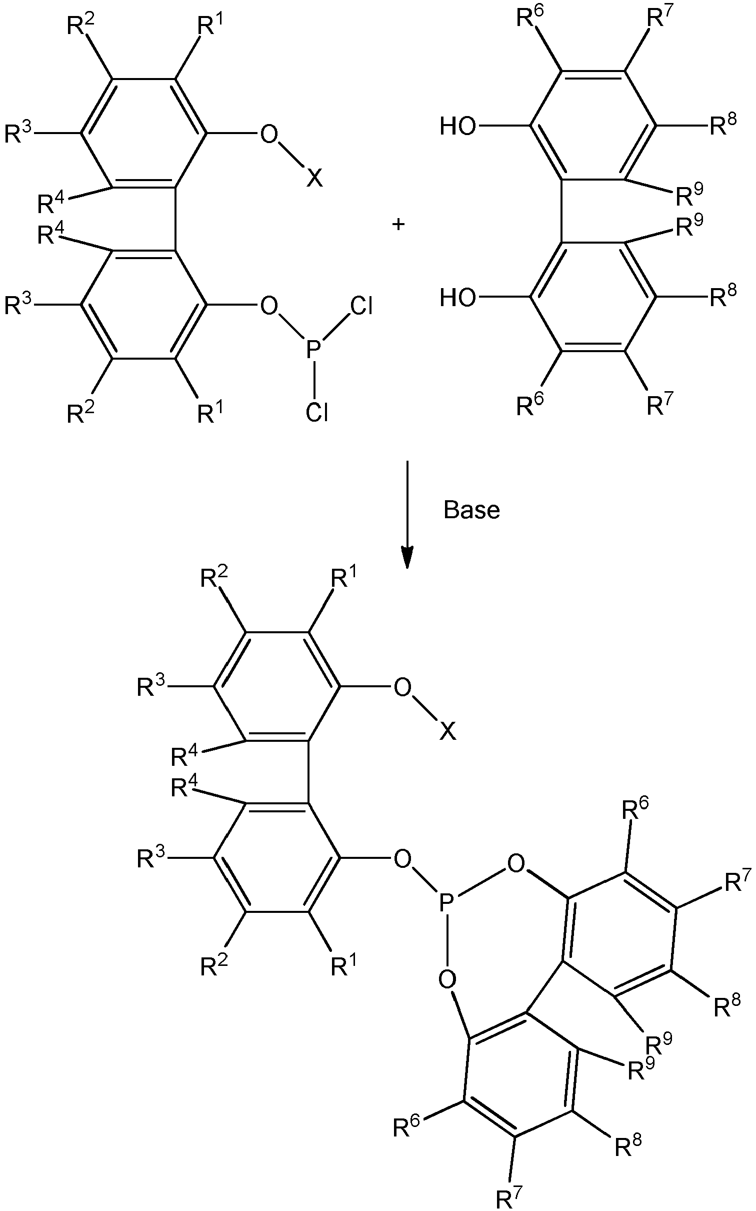 wobei
   R⁶, R⁷, R⁸, R⁹ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen (wie Cl, F, Br, I), COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂.

Das oben dargestellte Verfahren stellt eine spezielle Form der ersten von drei erfindungsgemäßen Syntheserouten dar.

Verfahren umfassend die Verfahrensschritte:
a) 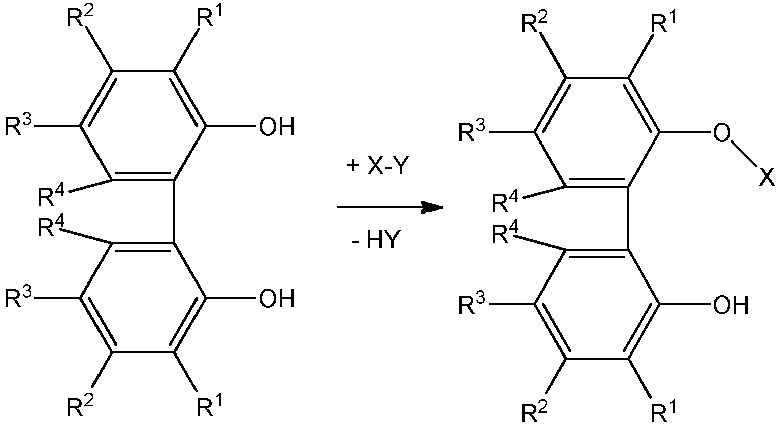
b2) 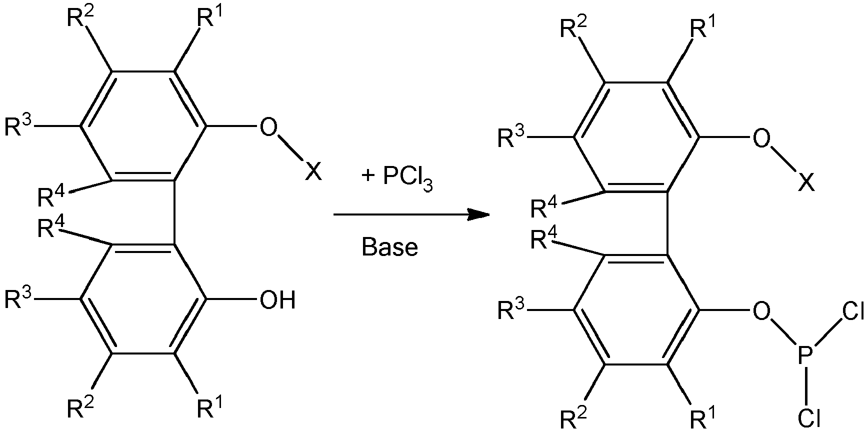
c2) 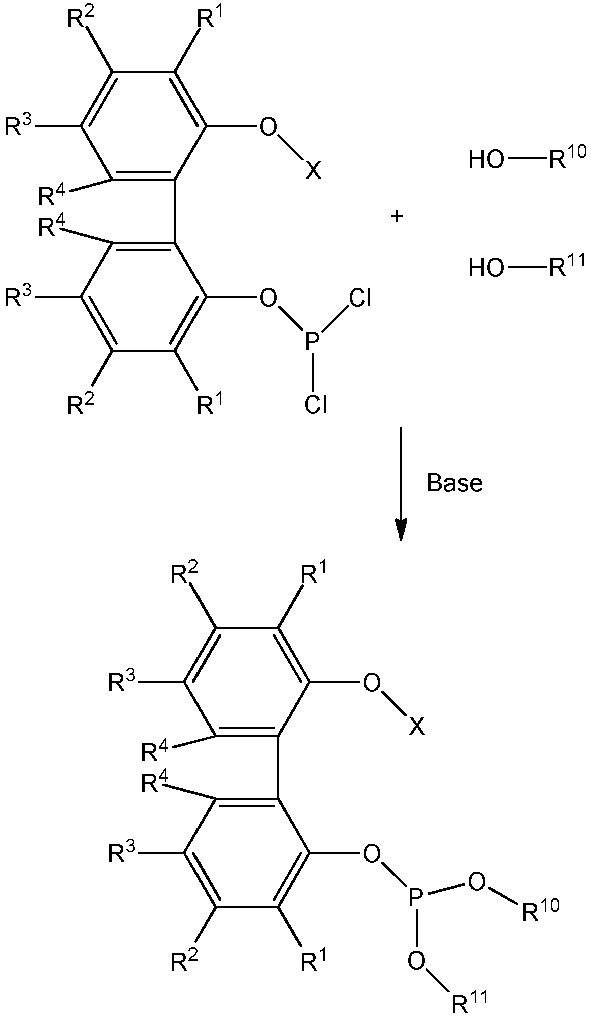 wobei
   R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
   R¹⁰ und R¹¹ jeweils unabhängig voneinander ausgewählt sind aus: -(C₁-C₁₂)-Alkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₁-C₁₂)-Alkyl-(C₆-C₂₀)-Aryl, -(C₆-C₂₀)-Aryl-COO-(C₁-C₁₂)-Alkyl, -(C₆-C₂₀)-Aryl-CONH-(C₁-C₁₂)-Alkyl, -(C₆-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₆-C₂₀)-Aryl-CO-(C₆-C₂₀)-Aryl,
   X für -COO-tert.Butyl steht;
   und Y für ein entsprechendes Gegenion zu X steht;
   wobei bezogen auf das Biphenol nur ein Äquivalent X-Y eingesetzt wird.

Die Wahl von Y ist dem Fachmann bekannt, da die Verbindung X-Y der Einführung der Gruppe X dient und Y den Gegenpart darstellt. Als Beispiel sei die Einführung von X = Me genannt. In diesem Fall ist dem Fachmann bekannt, dass er ein Methylierungsreagenz verwenden muss. Als solches kommen beispielsweise Methyliodid oder Dimethylsulfat in Frage. Somit würde die Gruppe Y für lodid bzw. Sulfat stehen (siehe auch Literaturstellen im Ausführungsteil). Somit stellt Y das Gegenion dar, das negativ geladen ist oder eine negative Partialladung trägt. Dieses Gegenion weist dementsprechend eine negative Oxidationszahl auf.

Das oben dargestellte Verfahren stellt die zweite von drei erfindungsgemäßen Syntheserouten dar.

Verfahren umfassend die Verfahrensschritte:
a) 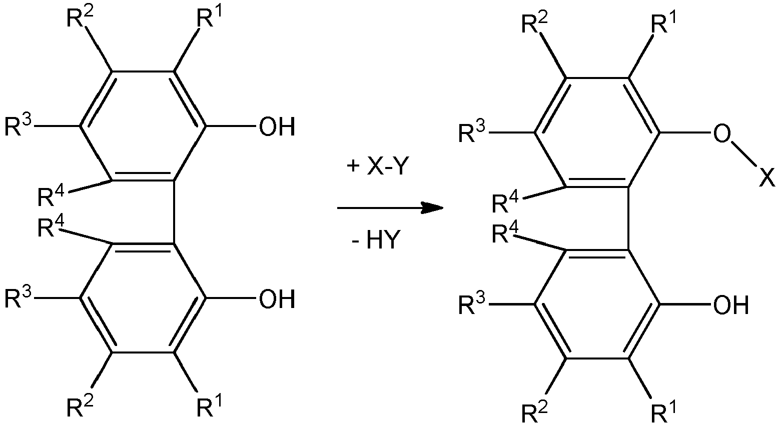
b2) 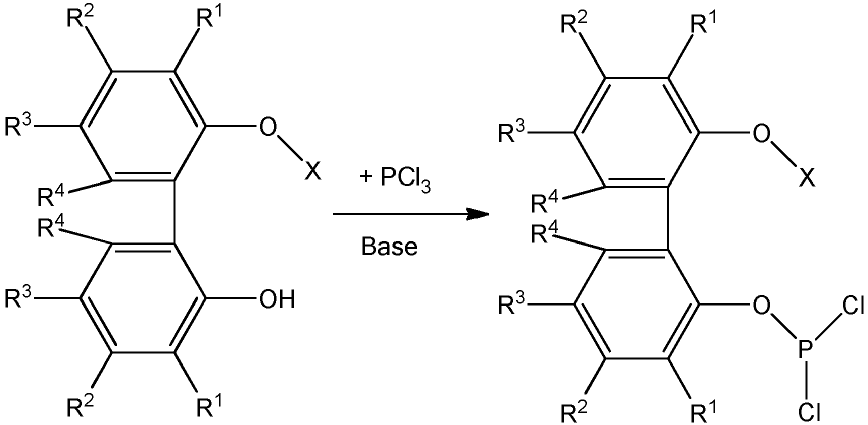
c2') 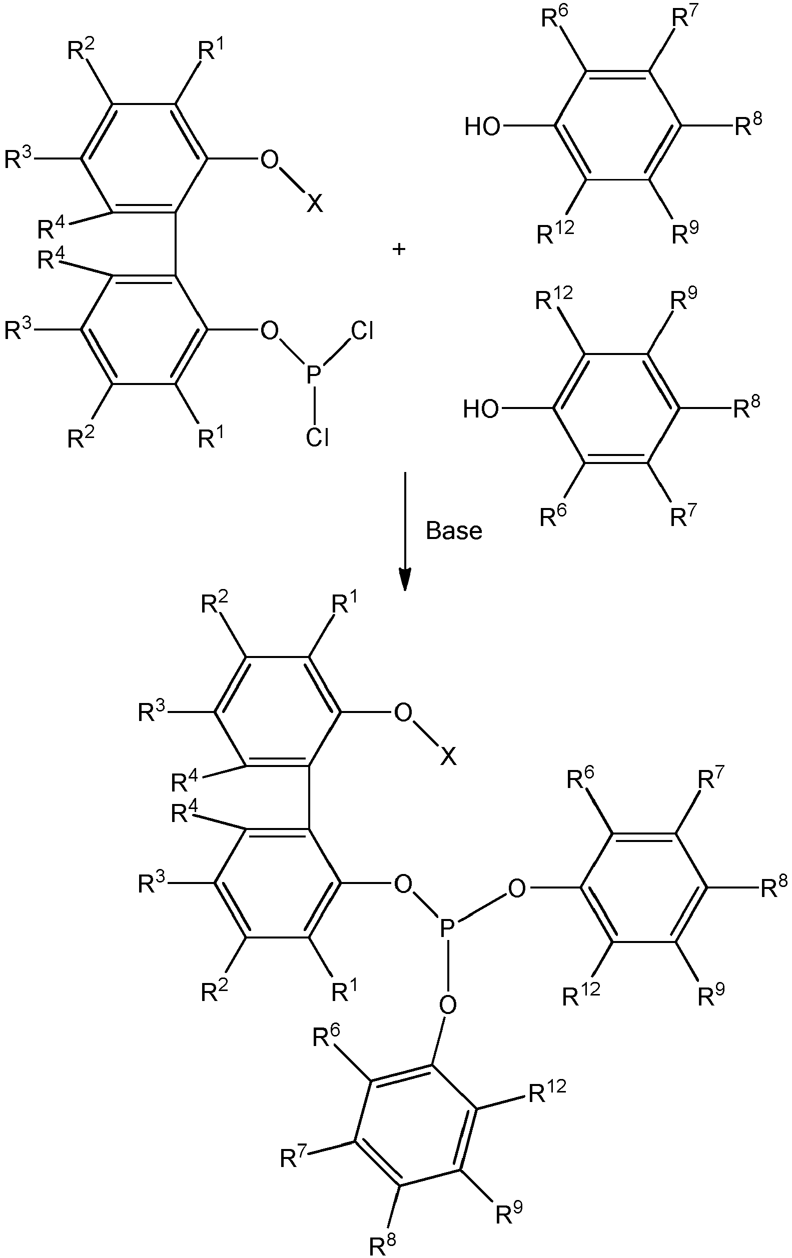 wobei
   R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen (wie Cl, F, Br, I), COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
   R⁶, R⁷, R⁸, R⁹, R¹² jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, -SO₃H; -SO₃Na, - NH₂; -N[(C₁-C₁₂)-Alkyl]₂.

Das oben dargestellte Verfahren stellt eine spezielle Form der zweiten von drei erfindungsgemäßen Syntheserouten dar.

Verfahren umfassend die Verfahrensschritte:
a) 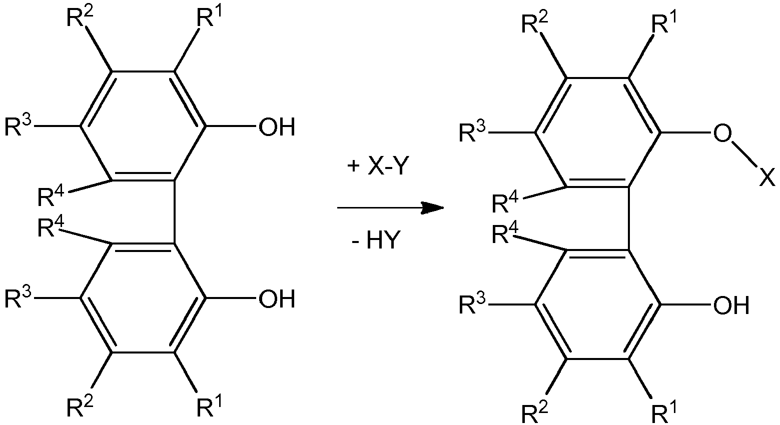
b3) 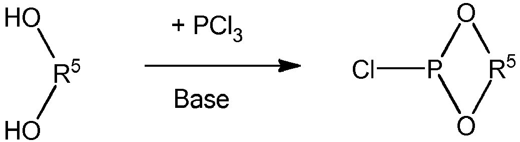
c3) 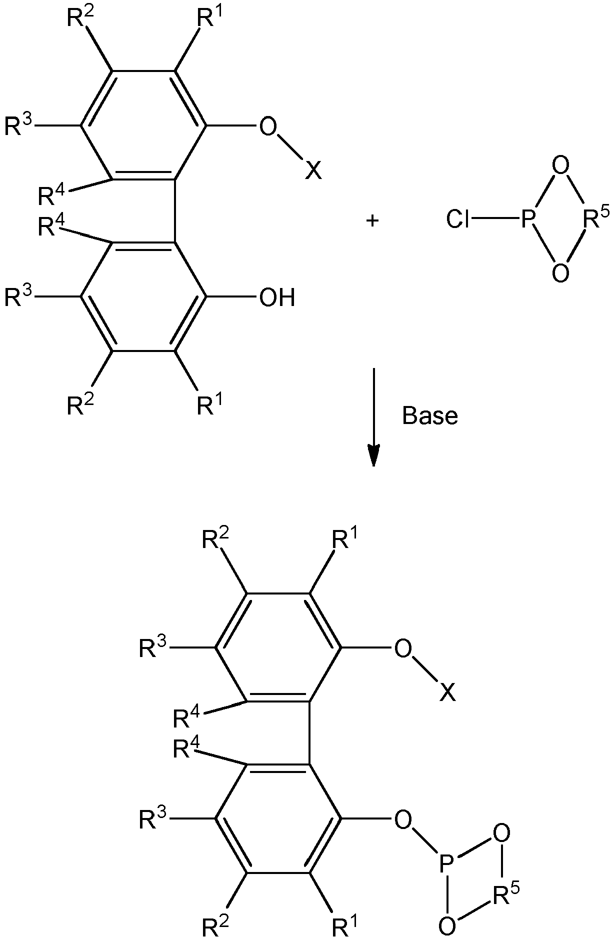 wobei
   R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
   R⁵ ausgewählt ist aus: -(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-, -(C₄-C₂₀)-Heteroaryl-, -(C₆-C₂₀)-Aryl-CO-(C₆-C₂₀)-Aryl-;
   X für -COO-tert.Butyl steht;
   und Y für ein entsprechendes Gegenion zu X steht;
   wobei bezogen auf das Biphenol nur ein Äquivalent X-Y eingesetzt wird.

Das oben dargestellte Verfahren stellt die dritte von drei erfindungsgemäßen Syntheserouten dar.

Verfahren umfassend die Verfahrensschritte:
a) 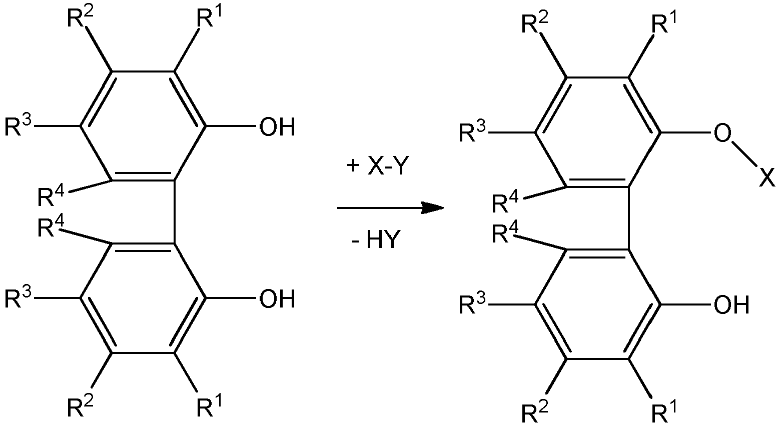
b3') 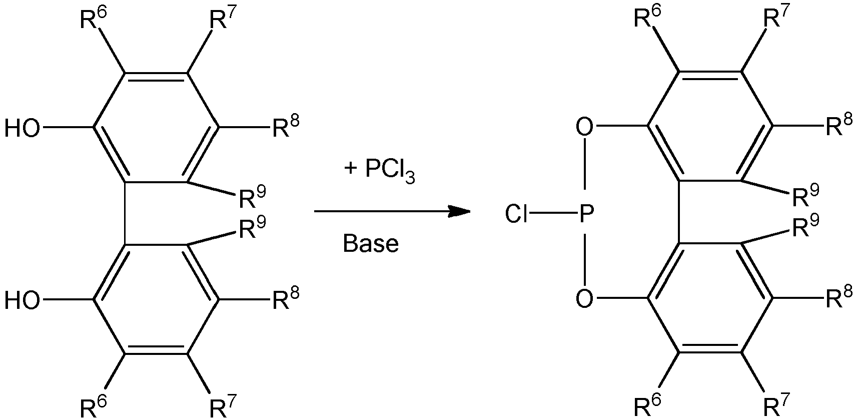
c3') 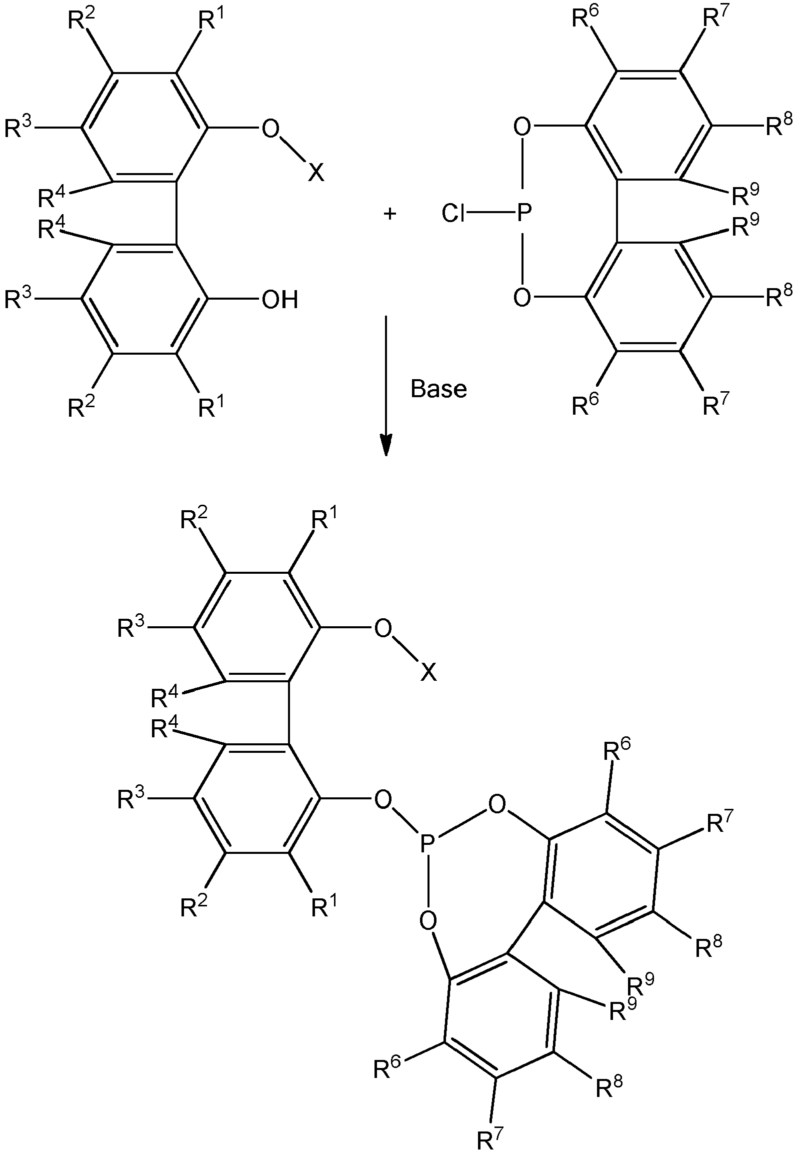 wobei
   R⁶, R⁷, R⁸, R⁹ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂.
Das oben dargestellte Verfahren stellt eine spezielle Form der dritten von drei erfindungsgemäßen Syntheserouten dar.
Der Schlüsselschritt in den erfindungsgemäßen Verfahren ist der Verfahrensschritt a), in welchem gezielt nur eine der beiden OH-Gruppen des Biphenols mit X-Y umgesetzt wird. Die Reaktion wird hierbei über die Stöchiometrie gesteuert. Bezogen auf das Biphenol wird nur ein Äquivalent X-Y eingesetzt.

X-Y wird bezüglich dem Biphenol in Verfahrensschritt a) in einem solchen molaren Verhältnis zugesetzt, dass als Hauptprodukt jenes Biphenol erhalten wird, bei dem genau eine OH-Gruppe mit X-Y zu einer OX-Gruppe reagiert hat.
Die bei der Reaktion als Nebenprodukte anfallende Verbindungen, wie beispielsweise das Biphenol, bei welchem beide OH-Gruppen mit X-Y reagiert haben, können vor dem nächsten Verfahrensschritt abgetrennt werden. Die Abtrennung kann beispielsweise mittels dem Fachmann bekannter Techniken erfolgen. Hierbei seien nur einige genannt, wobei die nachfolgende Aufzählung keinen Anspruch auf Vollständigkeit erhebt: Umkristallisation, Säulenchromatografie, Destillation, insbesondere Feststoffdestillation, Rühren in einem Lösungsmittel, wobei je nach Wahl des Lösungsmittels entweder die Nebenprodukte bevorzugt gelöst werden und das Hauptprodukt ungelöst als Suspension verbleibt oder aber die Nebenprodukte unlöslich sind und sich das Hauptprodukt löst.
Relevante dem Fachmann bekannte Gruppen, die zur Umsetzung mit einer OH-Gruppe dienen, sind in der nachfolgenden Auflistung exemplarisch und nicht erschöpfend dargestellt (siehe hierzu auch: P. G. M. Wuts, T. W. Greene "Greenes's Protective Groups in Organic Synthesis", fourth edition, 2007, John Wiley and Sons; Hoboken, New Jersey):

### - Carbonate

Relevante Carbonat-Gruppen und ihre Herstellung (siehe hierzu auch: P. G. M. Wuts, T. W. Greene "Greenes's Protective Groups in Organic Synthesis", fourth edition, 2007, John Wiley and Sons; Hoboken, New Jersey):
- Methyl (E. Fischer, H. O. L. Fischer, Ber. 46, 1138, (1913))
- Ethyl (analog E. Fischer, H. O. L. Fischer, Ber. 46, 1138, (1913))
- tert. Butyl (BOC) (siehe unten; M. M. Hansen, J. R. Riggs; Tetrahedron Lett., 39, 2705 (1998))
- 1-Adamantyl (Adoc) (B. Nyasse, U. Ragnarsson, Acta Chem. Scand., 47, 374 (1993))
- 2,4-Dimethylpent-3-yl (DOC) (K. Rosenthal, A. Karlström, A. Unden, Tetrahedron Lett., 38, 1075, (1997))
- 2,2,3-Trichloroethyl (T. B. Windholz, D. B. R. Johnston, Tetrahedron Lett., 8, 2555, (1967))
- Benzyl (M. Kuhn, A. von Wartburg, Helv. Chim. Acta, 52, 948, (1969))
- ebenfalls Carbamate (ArOCONHR) (G. Jäger, R. Geiger, W. Siedel, Chem. Ber. 101, 2762 (1968))

In einer Variante der zuvor beschriebenen Verfahren ist die Base ausgewählt aus: Triethylamin, Dibutylamin, Dimethylaminobutan, Pyridin, Dimethylaminopyridin, *N*-Methyl-2-pyrrolidon, Kalium-tert-butylat, Natrium-methylat, n-Butyllithium.

In einer Variante der zuvor beschriebenen Verfahren sind R¹, R², R³, R⁴ jeweils unabhängig voneinander ausgewählt aus: -H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -NH₂, -N[(C₁-C₁₂)-Alkyl]₂.

In einer Variante der zuvor beschriebenen Verfahren sind R¹, R², R³, R⁴ jeweils unabhängig voneinander ausgewählt aus: -H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - N[(C₁-C₁₂)-Alkyl]₂.

In einer Variante der zuvor beschriebenen Verfahren sind R¹, R², R³, R⁴ jeweils unabhängig voneinander ausgewählt aus: -H, -(C₁-C₁₂)-Alkyl, -O-(C₁-C₁₂)-Alkyl, -(C₆-C₂₀)-Aryl, -COO-(C₁-C₁₂)-Alkyl, - N[(C₁-C₁₂)-Alkyl]₂.

In einer Variante der zuvor beschriebenen Verfahren ist R⁵ ausgewählt aus: -(C₁-C₁₂)-Alkyl-, -(C₆-C₂₀)-Aryl-, -(C₆-C₂₀)-Aryl-(C₁-C₁₂)-Alkyl-, -(C₆-C₂₀)-Aryl-CO-(C₆-C₂₀)-Aryl-,-(C₁-C₁₂)-Alkyl-(C₆-C₂₀)-Aryl-.

In einer Ausführungsform steht R⁵ für:

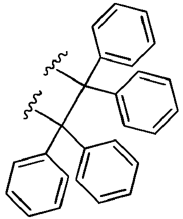

In einer Variante der zuvor beschriebenen Verfahren sind R⁶, R⁷, R⁸, R⁹, R¹² jeweils unabhängig voneinander ausgewählt aus: -H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -NH₂, -N[(C₁-C₁₂)-Alkyl]₂.
In einer Variante der zuvor beschriebenen Verfahren sind R⁶, R⁷, R⁸, R⁹, R¹² jeweils unabhängig voneinander ausgewählt aus: -H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - N[(C₁-C₁₂)-Alkyl]₂.
In einer Variante der zuvor beschriebenen Verfahren sind R⁶, R⁷, R⁸, R⁹, R¹² jeweils unabhängig voneinander ausgewählt aus: -H, -(C₁-C₁₂)-Alkyl, -O-(C₁-C₁₂)-Alkyl, -(C₆-C₂₀)-Aryl, -COO-(C₁-C₁₂)-Alkyl, - N[(C₁-C₁₂)-Alkyl]₂;
In einer Variante der zuvor beschriebenen Verfahren sind R⁶, R⁷, R⁸, R⁹, R¹² jeweils unabhängig voneinander ausgewählt aus:
-H, -(C₁-C₁₂)-Alkyl, -O-(C₁-C₁₂)-Alkyl.
Neben den Verfahren wird auch die Verwendung des durch diese Verfahren erhaltenen Produkts in einer Hydroformylierungsreaktion offenbart. Das Produkt fungiert hierbei als Ligand in einem Katalysatorkomplex, welcher sich aus dem Ligand und mindestens einem Metall-Zentral-Atom zusammensetzt. Dieser Katalysatorkomplex wird zur Katalyse einer Hydroformylierungsreaktion verwendet.
Verwendung einer Verbindung, welche mit einem zuvor beschriebenen Verfahren hergestellt wurde, als Liganden in einem Katalysatorkomplex, welcher eine Hydroformylierungsreaktion katalysiert. siehe hierzu R. Franke, D. Selent, A. Börner, "Applied Hydroformylation", Chem. Rev., 2012, DOI:10.1021/cr3001803; S. 5688 Schema 12 "General Method for the Preparation of a P-Modified Rh precatalyst" und darin zitierte Literaturstellen sowie P. W. N. M. van Leeuwen, in Rhodium Catalyzed Hydroformylation, P. W. N. M. van Leeuwen, C. Claver (Hrsg.), Kluwer, Dordrecht, 2000 unter anderem S. 48 ff, S.233 ff. und darin zitierte Literaturstellen sowie K.D. Wiese und D. Obst in Top. Organomet. Chem. 2006, 18, 1-13; Springer Verlag Berlin Heidelberg 2006 S. 6 ff sowie darin zitierte Literaturstellen.

Im Folgenden wird die Erfindung anhand von Ausführungsbeispielen näher erläutert.

### Abkürzungen:

ACN = Acetonitril
EtOAc = Ethylacetat
acac = acetylacetonat
NEt₃ = Triethylamin
DMAP = Dimethylaminopyridin
CH₂Cl₂ = Dichlormethan

### Allgemeine Arbeitsvorschriften

Alle nachfolgenden Präparationen wurden mit Standard-Schlenk-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).

Phosphortrichlorid (Aldrich) wurde vor dem Einsatz unter Argon destilliert. Alle präparativen Arbeiten erfolgten in ausgeheizten Gefäßen. Die Charakterisierung der Produkte erfolgte mittels NMR-Spektroskopie. Chemische Verschiebungen werden in ppm angegeben. Die Referenzierung der ³¹P-NMR-Signale erfolgte gemäß: SR_{31P} = SR_{1H} * (BF_{31P} / BF_{1H}) = SR_{1H} * 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84).

Die Aufnahme von Kernresonanzspektren erfolgte an Bruker Avance 300 bzw. Bruker Avance 400, die gaschromatografische Analyse an Agilent GC 7890A, die Elementaranalyse an Leco TruSpec CHNS und Varian ICP-OES 715, und die ESI-TOF Massenspektrometrie an Thermo Electron Finnigan MAT 95-XP und Agilent 6890 N/5973 Geräten.

### Synthese von Ligand 1

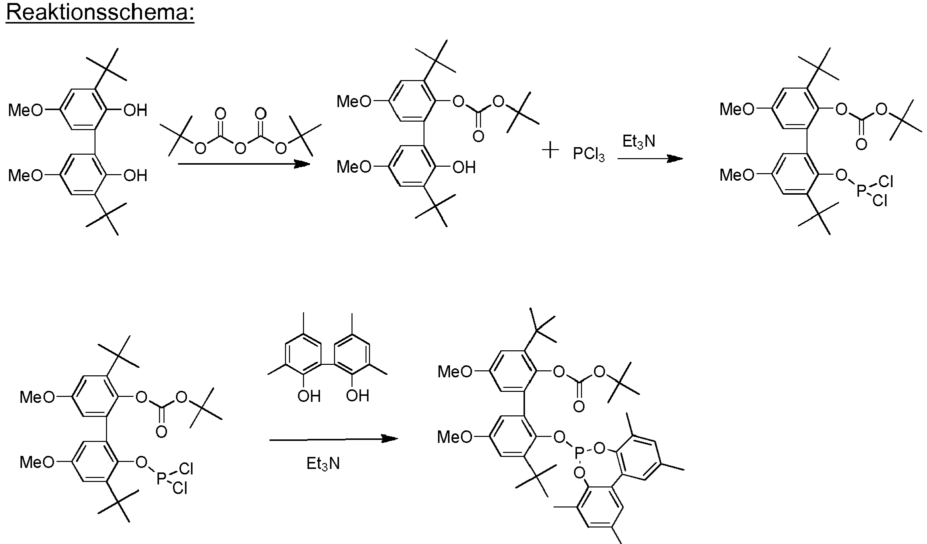

### Einführung der BOC-Gruppe:

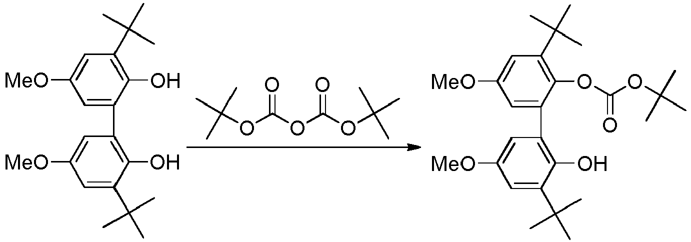

In einem 2L Schlenkkolben werden 400 mmol (143,8 g) des 3,3'-Di-tert.-butyl-5,5'-dimethoxy-[1,1'-biphenyl]-2,2'diol und 40 mmol (4,8 g) N,N-Dimethylaminopyridin (DMAP) in 900 mL CH₂Cl₂ gelöst. Anschließend wurden bei Raumtemperatur 400 mmol (88 g) Di-tert-butyldicarbonat in 280 ml CH₂Cl₂ gelöst, in einen 500 ml Tropftrichter überführt und innerhalb einer Stunde bei 32 °C zu der Biphenol/DMAP Lösung getropft. Die Lösung wurde über Nacht bei Raumtemperatur gerührt. Am nächsten Morgen wird das Lösungsmittel unter vermindertem Druck entfernt. Der leicht wachsartige, rötliche Rückstand wurde mit 800 ml n-Heptan versetzt und über Nacht gerührt. Dabei erhielt man einen weißen Rückstand, der abfiltriert, zweimal mit 50 ml n-Heptan nachgewaschen und dann getrocknet wurde. Das Zielprodukt konnte als weißer Feststoff (161,6 g, 84%) erhalten werden.

### Umsetzung von tert-Butyl-(3,3'-di-tert-butyl-2'-hydroxy-5,5'-dimethoxy-[1,1'-biphenyl]-2-yl)-carbonat mit Phosphortrichlorid:

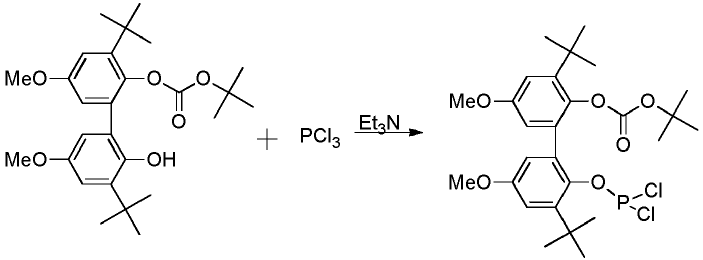

In einem sekurierten 250 ml Schlenkkolben wurden 12 g (0,026 mol) tert-Butyl-(3,3'-di-tert-butyl-2'-hydroxy-5,5'-dimethoxy-[1,1'-biphenyl]-2-yl)-carbonat unter Rühren in 120 ml getrocknetem Toluol und 12,8 ml (0,091 mol) Triethylamin gelöst.

In einem zweiten 500 ml Schlenkkolben wurden zunächst 100 ml getrocknetes Toluol mit 8,1 ml (0,091 mol) Phosphortrichlorid verrührt. Anschließend wurde die Phosphortrichlorid-Toluol-Lösung zu der zuvor hergestellten Carbonat-Amin-Toluol-Lösung innerhalb von 30 Minuten bei Raumtemperatur zugetropft. Nach vollständiger Zugabe wurde für 30 Minuten auf 80 °C erwärmt und über Nacht auf Raumtemperatur abgekühlt.

Am nächsten Morgen wurde die Mischung filtriert, mit 50 ml getrocknetem Toluol nachgewaschen und das Filtrat bis zur Trockne eingeengt. Das Zielprodukt konnte als Feststoff (13,1 g, 89%) erhalten werden. ³¹P-NMR (202,4 MHz, Toluol-ds): 203,2 und 203,3 ppm.

### Umsetzung von tert-Butyl-(3,3'-di-tert-butyl-2'-((dichiorophosphino)oxy)-5,5'-dimethoxy-[1,1'-biphenyl]-2-yl)-carbonat mit 3,3',5,5'-Tetramethyl-(1,1'-biphenyl)-2,2'-diol

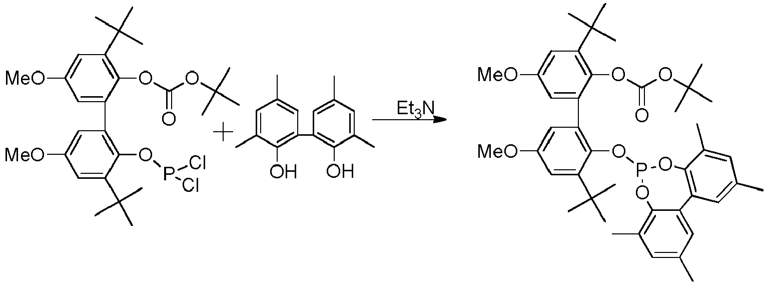

In einem sekurierten 1L Schlenkkolben wurden 24,7 g (0,044 mol) tert-Butyl-(3,3'-di-tert-butyl-2'-((dichlorophosphino)oxy)-5,5'-dimethoxy-[1,1'-biphenyl]-2-yl)-carbonat in 400 ml Acetonitril gelöst.

In einem zweiten sekurierten Schlenkkolben (1L) wurden 10,8 g (0,044 mol) 3,3',5,5'-Tetramethyl-(1,1'-biphenyl)-2,2'-diol in 200 ml Acetonitril und 13,1 ml (0,011 mol) getrocknetem Triethylamin unter Rühren gelöst. Anschließend wurde zu der Biphenol-Triethylamin-Lösung langsam die Chlorophosphit-Lösung hinzugetropft und über Nacht gerührt.

Der Ansatz wurde daraufhin filtriert und der Rückstand zweimal mit 15 ml Acetonitril gewaschen. Das Filtrat wurde unter vermindertem Druck eingeengt bis ein Niederschlag ausfiel. Dieser wurde filtriert und getrocknet. Das Zielprodukt konnte als weißer Feststoff (28,5 g, 87%) erhalten werden. ³¹P-NMR (202,4 MHz,Toluol-d₈): 139,4 ppm.

### Synthese von Ligand 2

### Umsetzung von tert-Butyl-(3,3'-di-tert-butyl-2'-hydroxy-5,5'-dimethoxy-[1,1'-biphenyl]-2-yl)-carbonat mit 2-Chloro-4,4,5,5-tetraphenyl-1,3,2-dioxaphospholan

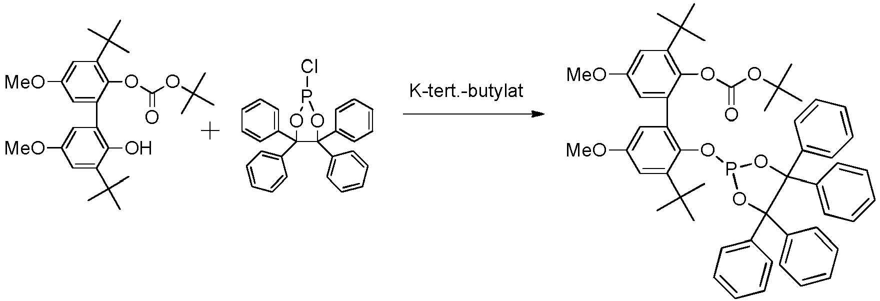

In einem sekurierten 250 ml Schlenkkolben wurden 9,1 g (0,021 mol) 2-Chloro-4,4,5,5-tetraphenyl-1,3,2-dioxaphospholan in 75 ml getrocknetem Toluol aufgelöst.

In einem zweiten Schlenkkolben (250 ml) wurden 9,2 g (0,02 mol) tert-Butyl-(3,3'-di-tert-butyl-2'-hydroxy-5,5'-dimethoxy-[1,1'-biphenyl]-2-yl)-carbonat und 2,3 g (0,02 mol) Kalium-tert.-butylat unter Rühren in 75 ml getrocknetem Toluol gelöst.

Anschließend wurde zu der Chlorophosphit-Lösung langsam bei Raumtemperatur die Carbonat-Kalium-tert.-butylat-Toluol-Mischung getropft und über Nacht bei Raumtemperatur gerührt.

Im Anschluss wurde das Lösungsmittel unter vermindertem Druck entfernt. Der erhaltene Rückstand wurde 5 Stunden in 75 ml getrocknetem Acetonitril gerührt. Der Feststoff wurde filtriert, mit getrocknetem Acetonitril nachgewaschen und getrocknet. Das Zielprodukt konnte als weißer Feststoff (15,3 g, 90%) erhalten werden. ³¹P-NMR (202,4 MHz, tToluol-d₈): 147,0 ppm.

### Synthese von Ligand 3

### Umsetzung von tert-Butyl-(3,3'-di-tert-butyl-2'-((dichlorophosphino)oxy)-5,5'-dimethoxy-[1,1'-biphenyl]-2-yl)-carbonat mit 2,2'-Biphenol

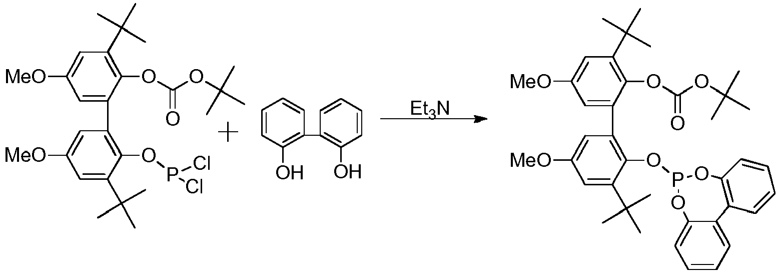

In einem sekurierten 250 ml Schlenkkolben wurden 10,5 g (0,019 mol) tert-Butyl-(3,3'-di-tert-butyl-2'-((dichlorophosphino)oxy)-5,5'-dimethoxy-[1,1'-biphenyl]-2-yl)-carbonat unter Rühren in 50 ml entgastem Acetonitril gelöst.

In einem zweiten sekurierten Schlenkkolben (250 ml) wurden 3,6 g (0,019 mol) 2,2'-Biphenol in 40 ml entgastem Acetonitril und 6,3 ml (0,045 mol) getrocknetem Triethylamin unter Rühren aufgelöst. Anschließend wurde zu der Biphenol-Triethylamin-Lösung langsam bei Raumtemperatur die Chlorophosphit-Mischung hinzugetropft und über Nacht bei Raumtemperatur gerührt. Der erhaltene Feststoff wurde filtriert und getrocknet. Das Zielprodukt konnte als weißer Feststoff (11,5 g, 90%) erhalten werden. ³¹P-NMR (202,4 MHz, Toluol-ds): 146,2 ppm.

### Synthese von Ligand 4

### Umsetzung von tert-Butyl-(3,3'-di-tert-butyl-2'-((dichlorophosphino)oxy)-5,5'-dimethoxy-[1,1'-biphenyl]-2-yl)-carbonat mit 3,3,5,5-Tetra-tert.-butyl-biphenol

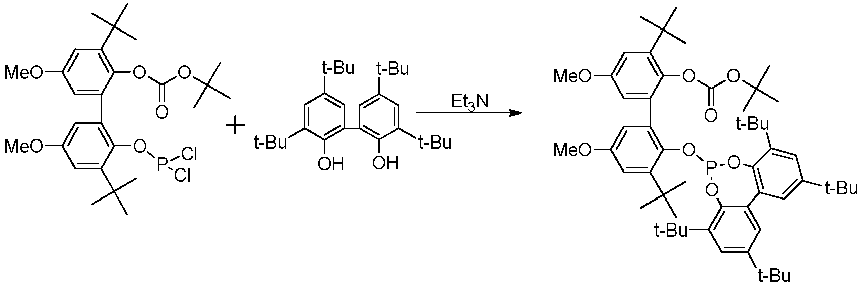

In einem sekurierten 250 ml Schlenkkolben wurden 7.0 g (0,0125 mol) tert-Butyl-(3,3'-di-tert-butyl-2'-((dichlorophosphino)oxy)-5,5'-dimethoxy-[1,1'-biphenyl]-2-yl)-carbonat in 100 ml getrocknetem Acetonitril gelöst.

In einem zweiten sekurierten Schlenkkolben (100 ml) wurden 5.1 g (0,0125 mol) 3,3',5,5'-Tetra-tert.-butyl-biphenol in 60 ml getrocknetem Acetonitril und 4.2 ml (0,03 mol) getrocknetem Triethylamin unter Rühren aufgelöst. Im Anschluss wurde die Biphenol-Triethylamin-Lösung langsam bei Raumtemperatur zu der Chlorophosphit-Lösung getropft und über Nacht gerührt. Ein Teil des Lösungsmittels wurde unter vermindertem Druck entfernt. Der ausgefallene Feststoff wurde filtriert und getrocknet. Das Zielprodukt konnte als weißer Feststoff (10,2 g, 91%) erhalten werden. ³¹P-NMR (202,4 MHz, toluene-ds): 142,7 ppm.

### Synthese von Ligand 5

### Umsetzung von tert-Butyl-(3,3'-di-tert-butyl-2'-((dichlorophosphino)oxy)-5,5'-dimethoxy-[1,1'-biphenyl]-2-yl)-carbonat mit 3,3-Di-tert.butyl-5.5-dimethoxy-biphenol

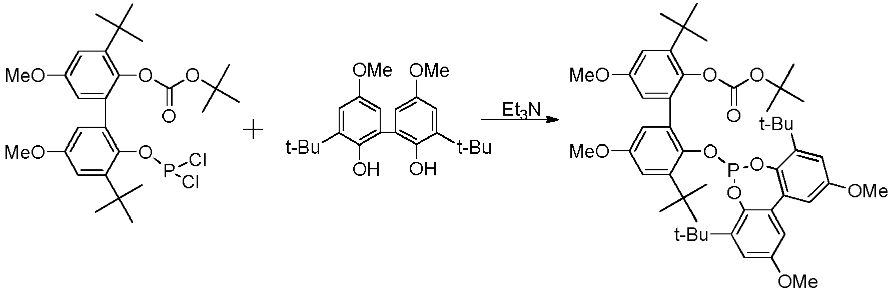

In einem sekurierten 250 ml Schlenkkolben wurden 7 g (0,0125 mol) tert-Butyl-(3,3'-di-tert-butyl-2'-((dichlorophosphino)oxy)-5,5'-dimethoxy-[1,1'-biphenyl]-2-yl)-carbonat in 100 ml getrocknetem Acetonitril gelöst.

In einem zweiten sekurierten Schlenkkolben (100 ml) wurden 4.5 g (0,0125 mol) 3,3-Di-tert.-butyl-5,5-dimethoxy-biphenol in 60 ml getrocknetem Acetonitril und 4.2 ml (0,03 mol) entgastem Triethylamin gelöst. Im Anschluss wurde die Biphenol-Triethylamin-Lösung langsam bei Raumtemperatur zu der Chlorophosphit-Lösung getropft und über Nacht bei Raumtemperatur gerührt.

Ein Teil des Lösungsmittels wurde unter vermindertem Druck entfernt. Der ausgefallene Feststoff wurde filtriert und getrocknet. Das Zielprodukt konnte als weißer Feststoff (10,5 g, 96%) erhalten werden. ³¹P-NMR (202,4 MHz, Toluol-d₈): 140,9.

Einführung der Offenbart ist die Einführung der Me-Gruppe, welche nicht unter die Ansprüche fällt:

### Darstellung von 3,3'-di-tert-butyl-2',5,5'-trimethoxy-[1,1'-biphenyl]-2-ol

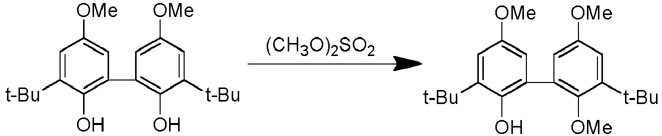

In einem sekurierten 1 L Schlenkkolben wurden 37.6 g (0,104 mol) 3,3'-di-tert-butyl-5,5'-dimethoxy-[1,1'-biphenyl]-2,2'-diol und 17.3 g (0,124 mol) Kaliumcarbonat (wasserfrei) vorgelegt und unter Rühren in 10.0 ml (0,104 mol) Dimethylsulfat und 380 ml getrocknetem Aceton gelöst. Die erhaltene Suspension wurde 7,5 Stunden unter Rückfluss gekocht und anschließend auf Raumtemperatur abgekühlt.

Dann wurden 100 ml einer 2 molare Ammoniak-Lösung hinzugegeben und für 4 h bei Raumtemperatur gerührt. Anschließend wurde mit 200 ml Methylenchlorid ausgeschüttelt und die wässrige alkalische Phase mittels 1 molarer Salzsäure-Lösung (ca. 280 ml) sauer gestellt, die wiederum anschließend 3 mal 100 ml Methylenchlorid ausgeschüttelt wurde. Die erhaltenen organischen Phasen wurden vereinigt und mit 1 molarer Salzsäurelösung (100 ml) ausgeschüttelt.

Die organische Phase wurde noch 3 mal mit VE-Wasser (200 ml) gewaschen und über Magnesiumsulfat getrocknet. Das Lösungsmittel wurde unter vermindertem Druck entfernt, das erhaltene Öl wurde mit 50 ml Isopropanol gewaschen, filtriert und anschließend getrocknet. Das Produkt konnte als weißer Feststoff in 30,8 g (Ausbeute 74,9 %) erhalten werden.

### Darstellung von 3,3',5,5'-tetra-tert.-butyl-2-metoxy-[1,1'-biphenyl]-2-ol (entspricht nicht der Erfindung)

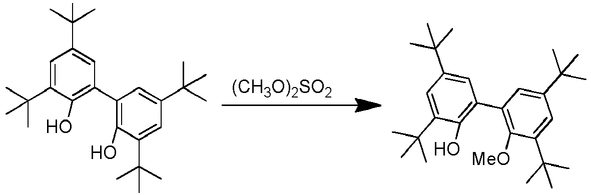

In einem sekurierten 1000 mL Schlenkkolben wurden 43 g (0,104 mol) 3,3',5,5'-Tetra-tert.-butyl-[1,1'-biphenyl]-2,2'-diol und 21,6 g (0,154 mol) Kaliumcarbonat vorgelegt und unter Rühren in 10,00 ml (0104 mol) Dimethylsulfat und 430ml getrocknetem Aceton gelöst. Die erhaltene Suspension wurde 6 Stunden unter Rückfluss gekocht und anschließend auf Raumtemperatur abgekühlt.

Nach Zugabe von 110 ml 2 molare Ammoniak-Lösung wurde 4 h gerührt. Anschließend wurde mit 200 ml Methylenchlorid ausgeschüttelt und die wässrige alkalische Phase mittels 1 molarer Salzsäure-Lösung (ca. 280 ml) sauer gestellt, die wiederum anschließend 3 mal 100 ml Methylenchlorid ausgeschüttelt wurde. Die erhaltenen organischen Phasen wurden vereinigt und mit 1 molarer Salzsäurelösung (100 ml) ausgeschüttelt.

Die organische Phase wurde noch 3 mal mit VE-Wasser (200 ml) gewaschen und über Magnesiumsulfat getrocknet. Das Lösungsmittel wurde unter vermindertem Druck entfernt, das erhaltene Öl wurde mit 50 ml Isopropanol gewaschen, filtriert und anschließend getrocknet. Das Produkt konnte als weißer Feststoff in 33,5 g (Ausbeute 75 %) erhalten werden.

### Synthese der Chlorophosphite:

6-Chlorodibenzo[*d*,*f*][1,3,2]dioxaphosphepin wurde nach DE 10 2008 043 584 und 2-Chloro-4,4,5,5-tetraphenyl-1,3,2-dioxaphospholan nach DE 10 2006 058 682 hergestellt.

Die Herstellung von 2,2'-Bis-(3,5-ditert.-butyl)-phenol-chlorophosphit erfolgte nach folgender Vorschrift:

### Darstellung von 2,2'-Bis-(3,5-ditert.-butyl)-phenol-chlorophosphit (entspricht nicht der Erfindung)

In einem sekurierten 500 mL Schlenkkolben wurden 41g (0,1 mol) 2,2'-Bis-(3,5-ditert.-butyl)-phenol und 30,7 g (42,3 mL; 0,3 mol) getrocknetes Triethylamin in 300 mL getrocknetem Toluol gelöst.

In einem zweiten sekurierten Schlenkkolben (1000 mL) löste man 13,9 g (8,8 mL; 0,1 mol) Phosphortrichlorid in 600 mL getrocknetem Toluol und tropfte unter kräftigem Rühren zu dieser Lösung langsam und stetig bei einer Temperatur zwischen -5 und 0 °C die zuvor hergestellte Diphenol-Triethylamin-Toluol-Lösung hinzu. Die Lösung ließ man über Nacht auf Raumtemperatur erwärmen. Das entstehende Ammoniumchlorid wurde abfiltriert und das Lösemittel unter vermindertem Druck bis zur Trockene eingeengt. Das Produkt konnte in 98%iger Ausbeute erhalten werden (47g).

Alle anderen Chlorophosphite lassen sich in analoger Weise, d.h. durch Zusatz von Phosphortrichlorid in Gegenwart einer Base, herstellen. Siehe hierzu auch "Phosphorous(III) Ligands in Homogeneous Catalysis - Design and Synthesis" von Paul C.J. Kamer und Piet W.N.M. van Leeuwen; John Wiley and Sons, 2012; unter anderem S. 94 ff. und darin zitierte Literaturstellen.

### Darstellung von Biphenyl-3,3',5,5'-Tetratert.-butyl-2-hydroxy-2'-dichlorophosphit (entspricht nicht der Erfindung)

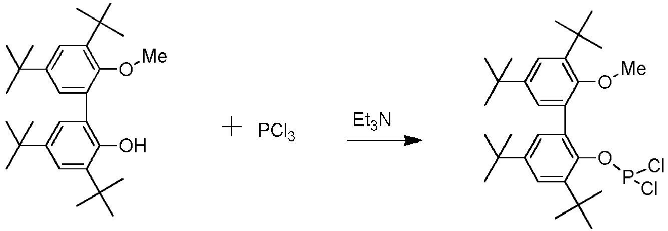

In einem sekurierten 250 ml Schlenkkolben wurde 10,62 g (0,025 mol) 3,3',5,5'-Tetratert.-butyl-2-hydroxy-2'-methoxy-biphenyl unter Rühren in 50 ml getrocknetem Toluol gelöst und mit 3,5 ml (0,025 mol) Triethylamin versetzt. Zu der erhaltenen Lösung tropft man bei Raumtemperatur unter kräftigem Rühren 2,2 ml (0,025 mol) Phosphortrichlorid hinzu und erhitzt dann für 4 Stunden auf 105 °C. Zur Aufarbeitung filtriert man das ausgefallene Ammoniumchlorid ab und wäscht 2 mal mit 25 ml Toluol nach. Das Filtrat wird bis zur Trockne eingeengt. Das Produkt konnte in 63%iger Ausbeute erhalten werden.

### Darstellung von Dichloro((3,3'-di-tert-butyl-2',5,5'-trimethoxy-[1,1'-biphenyl]-2-yl)oxy)phosphine (entspricht nicht der Erfindung)

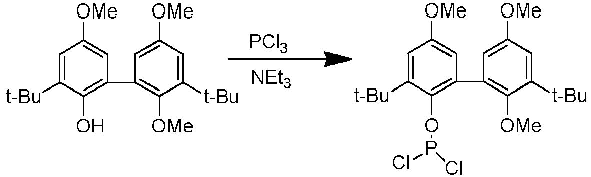

In einem sekurierten 250 ml Schlenkkolben wurden 28,4 g (0,072 mol) 3,3'-di-tert-butyl-2',5,5'-trimethoxy-[1,1'-biphenyl]-2-ol unter Rühren in 200 ml getrocknetem Toluol 40.0 ml (0,282 mol) entgastes Triethylamin gelöst.

In einem zweiten 500 ml Schlenkkolben wird zunächst 200 ml getrocknetes Toluol vorgelegt und dann 25 ml (0,281 mol) Phosphortrichlorid zugegeben. Nun wird unter kräftigem Rühren die zuvor hergestellte Phenol/Amin/Toluol-Lösung innerhalb von 1 h bei Raumtemperatur zu der Phosphortrichlorid/Toluol-Lösung zugetropft. Nach vollständiger Zugabe wird für 4 h auf 80 °C erwärmt und über Nacht auf Raumtemperatur abgekühlt.

Die Reaktionsmischung wird filtriert, dreimal mit 50 ml getrocknetem Toluol gewaschen und das Filtrat wird bis zur Trockne eingeengt. Das Produkt konnte in 83%iger Ausbeute erhalten werden (35,3 g).

### Synthese von Ligand 6 (entspricht nicht der Erfindung)

### Darstellung von 6-((3,3'5,5'-Tetra-tert-butyl-2'-methoxy-[1,1'-biphenyl]-2-yl)oxy)dibenzo[d,f)[1,3,2]dioxaphosphepine

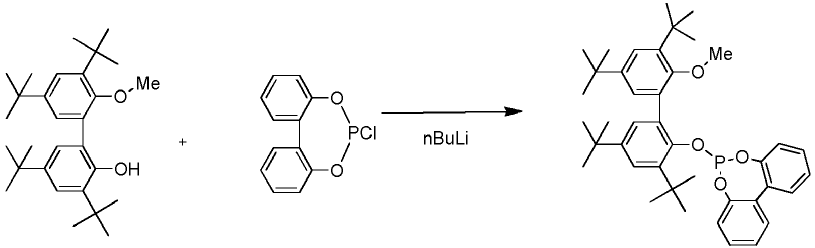

In einem sekurierten 250 ml Schlenkkolben wurden 5 g (0,012 mol) 3,3',5,5'-Tetratert.-butyl-2-hydroxy-2'-methoxy-biphenyl in 50 ml getrocknetem THF gelöst. Dann wurden 7,5 ml Butyllithium (1,6 molare Lösung, 0,012 mol) unter kräftigem Rühren zu der Tetrahydrofuran/Phenol - Mischung bei -20 °C getropft. Nach vollständiger Zugabe wurde eine Stunde bei 0 °C gerührt. In einem zweiten sekurierten Schlenk (100 ml) wurden 3 g (0,012 mol) 6-Chlorodibenzo[*d,f*][1,3,2]dioxaphosphepin unter Rühren in 50 mL getrocknetem THF aufgelöst. Anschließend wurde die Chlorophosphit-Lösung zu der vorbereiteten Phenol-Lösung unter kräftigem Rühren bei 0 °C getropft. Das Reaktionsgemisch wurde für 2 Stunden bei 60 °C erwärmt. Nach dem Abkühlen auf Raumtemperatur wurde das Lösungsmittel unter vermindertem Druck entfernt.

Der erhaltene Rückstand wurde in 50 ml Methylenchlorid aufgenommen, filtriert um das Lithiumchlorid abzutrennen, und dann wieder bis zur Trockene eingeengt und mit Isopropanol gewaschen. Das Produkt konnte in 5,5 g (72,8%) erhalten werden.

### Synthese von Ligand 7 (entspricht nicht der Erfindung)

### Darstellung von 2,4,8,10-Tetra-tert-butyl-6-((3,3',5,5'-tetra-tert-butyl-2'-methoxy-[1,1'-bipheny]-2-yl)oxy)dibenzo[d,f][1,3,2]dioxaphosphepine

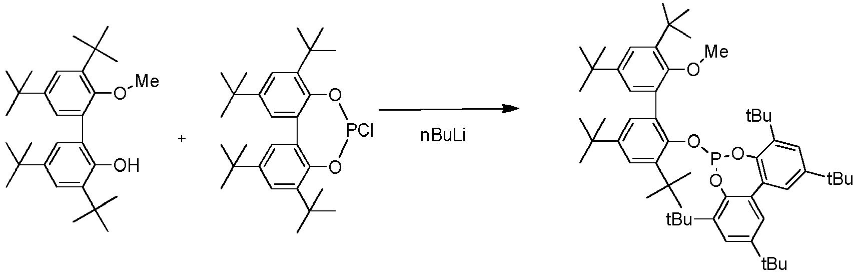

In einem sekurierten 250 ml Schlenkkolben wurden 5 g (0,012 mol) 3,3',5,5'-Tetratert.-butyl-2-hydroxy-2'-methoxy-biphenyl in 50 ml getrocknetem THF aufgelöst und bei -20 °C mit 7,5 ml Butyllithium (1,6 molare Lösung, 0,012 mol) versetzt. Nach vollständiger Zugabe wurde noch eine Stunde bei 0 °C gerührt. In einem zweiten sekurierten Schlenkkolben (100 ml) wurden 5,7 g (0,012 mol) 2,2'-Bis-(3,5-ditert.-butyl)-phenol-chlorophosphit unter Rühren in 50 mL getrocknetem THF aufgelöst. Dann wurde unter kräftigem Rühren die Chlorophosphit-Lösung zu der vorbereiteten Phenol-Lösung bei 0 °C getropft. Nach vollständiger Zugabe wurde die Reaktionsmischung über Nacht langsam auf Raumtemperatur erwärmt. Dann wurde die Reaktionsmischung für 20 Stunden auf 60 °C erwärmt. Zur Aufarbeitung wurde das Lösungsmittel bei Raumtemperatur unter vermindertem Druck entfernt. Der erhaltene Rückstand wurde in 50 ml Methylenchlorid aufgenommen und das zurückbleibende Lithiumchlorid wurde abfiltriert. Das erhaltene Filtrat wurde mit ca. 40 ml getrocknetem Acetonitril gewaschen und erneut abfiltriert. Der Rückstand wurde mit ca. 50 ml Isopropanol und ca. 50 ml Pentan gewaschen. Das Produkt konnte in 35 %iger Ausbeute erhalten werden.

### Synthese von Ligand 8 (entspricht nicht der Erfindung)

### Darstellung von Bis(2,4-di-tert-butylphenyl)-(3,3',5,5'-tetra-tert-butyl-2'-methoxy-[1,1'-biphenyl]-2-yl)phosphit

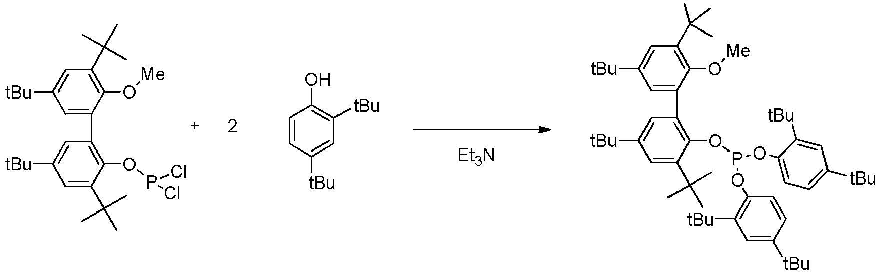

In einem sekurierten 250 ml Schlenk wurden 2,6 g (0,012 mol) 2,4-Ditert.-butylphenol unter Rühren in 100 ml getrocknetem Toluol gelöst und mit 3,5 ml (0,025 mol) getrocknetem Triethylamin versetzt.

In einem zweiten sekurierten Schlenk (100 ml) wurden 3,3 g (0,006 mol) Biphenyl-3,3',5,5'-Tetratert.-butyl-2-methoxy-2'-dichlorophosphit unter Rühren in 100 ml getrocknetem Toluol gelöst. Anschließend tropfte man die Chlorophosphit/Toluol-Lösung unter kräftigem Rühren bei 0 - (-4) °C in die Phenol/Amin/Toluol-Lösung und ließ die Lösung über Nacht auf Raumtemperstur erwärmen.

Das Ammoniumchlorid absetzen gelassen und zur Umsatzprüfung von der obenstehenden Lösung eine Probe für das GC/MS entnommen. Danach wurde das entstandene Ammoniumchlorid abfiltriert und das Lösungsmittel unter vermindertem Druck bis zur Trockenen eingeengt. Das entstandene Öl wurde aus getrocknetem Acetonitril umkristallisiert und getrocknet. Das Produkt konnte in 52%iger Ausbeute erhalten werden.

### Synthese von Ligand 9 (entspricht nicht der Erfindung)

### Darstellung von 6-((3,3'-Di-tert-butyl-2',5,5'-trimethoxy-[1,1'-biphenyl]-2-yl)oxy)-2,4,8,10-tetramethyldibenzo[d,f][1,3,2]dioxaphosphepine

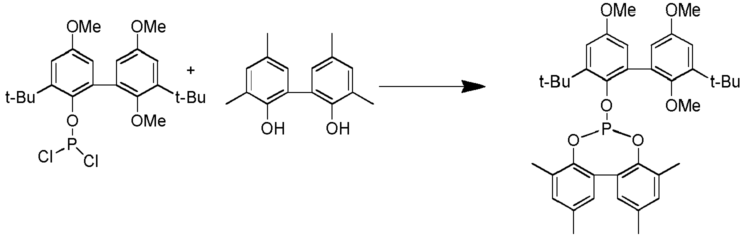

In einem sekurierten 500 ml Schlenkkolben wurden 4.1 g (0,008mol) Dichloro((3,3'-di-tert-butyl-2',5,5'-trimethoxy-[1,1'-biphenyl]-2-yl)oxy)phosphine in 100 ml entgastem Acetonitril gelöst.

In einem zweiten sekurierten Schlenkkolben (500 ml) wurden 1.89 g (0,008 mol) 3,3',5,5'-tetramethyl-(1,1'-biphenyl)-2,2'-diol in 100 ml entgastem Acetonitril und 2.3 ml (0,016 mol) N,N'-Dimethylaminobutan gelöst. Anschließend wird zur Chlorophosphit-Lösung langsam und stetig bei Raumtemperatur in die "Biphenol" - Amin Lösung getropft und 2,5 h bei Raumtemperatur gerührt.

Das Lösemittel wurde bei 40°C unter vermindertem Druck entfernt, der erhaltene Rückstand wurde in Toluol aufgenommen, das Hydrochlorid abfiltriert und das Lösungsmittel erneut unter vermindertem Druck entfernt. Das Produkt konnte in 72%iger Ausbeute (4.1 g) erhalten werden.

### Synthese von Ligand 10 (entspricht nicht der Erfindung)

### Darstellung von 2,4,8,10-Tetramethyl-6-((3,3',5,5'-tetra-tert-butyl-2'-methoxy-[1,1'-bipheny]-2-yl)oxy)dibenzo[d,f][1,3,2]dioxaphosphepine

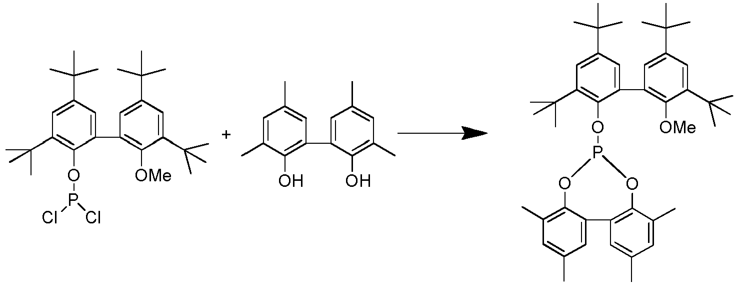

In einem sekurierten 250 ml Schlenkkolben wurden 10 g (0,017 mol) Biphenyl-3,3',5,5'-Tetratert.-butyl-2-methoxy-2'-dichlorophosphit in 50 ml entgastem Toluol gelöst. In einem zweiten Schlenkkolben (100 ml) wurden 5g (0,019mol) 3,3',5,5'-Tetramethyl-[1,1'-biphenyl]-2,2'-diol in 50 ml entgastem Toluol und 4 ml (0,029mol) entgastem Triethylamin gelöst. Anschließend wurde die Phenol/Amin/Toluol-Lösung tropfenweise zu der Chlorophosphit/Toluol-Lösung unter kräftigem Rühren und bei Raumtemperatur zugegeben.

Nach vollständiger Zugabe wurde die Reaktionsmischung für eine Stunde auf 80 °C erwärmt und über Nacht im Ölbad wieder auf Raumtemperatur abgekühlt.

Zur Aufarbeitung wurde das entstandene Aminhydrochlorid abfiltriert und die erhaltene Mutterlauge unter vermindertem Druck bis zur Trockne eingeengt. Anschließend wurde der Feststoff (8,7 g) nochmals in 30 ml Toluol aufgelöst. In einem anderen Schlenkkolben wurden 260 ml Methanol, 13 ml entgastes Wasser und 13 ml entgastes Dimethylaminobutan gefüllt. Unter Rühren wurde dann langsam die Monophosphit/Toluol-Lösung bei Raumtemperatur zu der Methanol-Lösung getropft und eine Stunde bei Raumtemperatur gerührt, dann mittels Eisbad auf 0 °C abgekühlt und nochmal zwei Stunden gerührt. Die entstandene Suspension wurde abfiltriert. Das Produkt konnte als Feststoff erhalten werden (6,4 g).

Wie die oben beschriebenen Ausführungsbeispiele zeigen, kann mit Hilfe der erfindungsgemäßen Verfahren ausgehend von einem Biphenol effizient und selektiv ein Monophosphiten hergestellt werden. Hierbei ist besonders vorteilhaft, dass nach der Reaktion einer biphenolischen OH-Gruppe zu einer O-X-Gruppe nur noch die Reaktion an der verbleibenden OH-Gruppe stattfinden kann, wodurch gezielt und effektiv neue Monophosphite hergestellt werden können. Weiterhin ist es möglich, dieses Prinzip auf eine Vielzahl von Verbindungen anzuwenden, da durch die Wahl des Restes X eine Vielzahl von neunen Verbindungen zugänglich sind. Durch geeignete Wahl der Bausteine und modulare Kombination der selbigen kann somit einfach und effizient eine Ligandenbibliothek hergestellt werden.

Bei der Herstellung des Monophosphits des Typs (**II**), insbesondere über den Syntheseweg b), bei dem das Phosphortrichlorid zunächst mit einem Alkohol in Gegenwart einer Base zu einem Dihalogenophosphorigsäuremonoester umgesetzt wird, kommt es häufig zu Nebenreaktionen, da nur ein Cl durch eine OH-Gruppe ausgetauscht wird oder aber alle drei. Weiterhin kommt es häufig zu einem Gemisch aus verschiedenen Halogenphosphorigsäureestern, die zu einer Vielzahl von Nebenreaktionen bei der nachfolgenden Synthese führen können und deren Isolierung aufgrund der Hydolyseempfindlichkeit der Substanzen schwierig und aufwendig ist. Dies ist bei dem erfindungsgemäßen Verfahren nicht der Fall, da nach der Reaktion zur O-X-Gruppe nur noch eine OH-Gruppe für weitere Reaktionen zur Verfügung steht. Ferner ist eine Reinigung der unter dem erfindungsgemäßen Syntheseweg a) beschriebenen Verbindungen deutlich einfacher, da diese in der Regel weniger luft- und hydrolyseempfindlich sind als die im Stand der Technik beschriebenen Halogenphosphorigsäureester.

## Patentansprüche

1. Verfahren umfassend die Verfahrensschritte:
a) 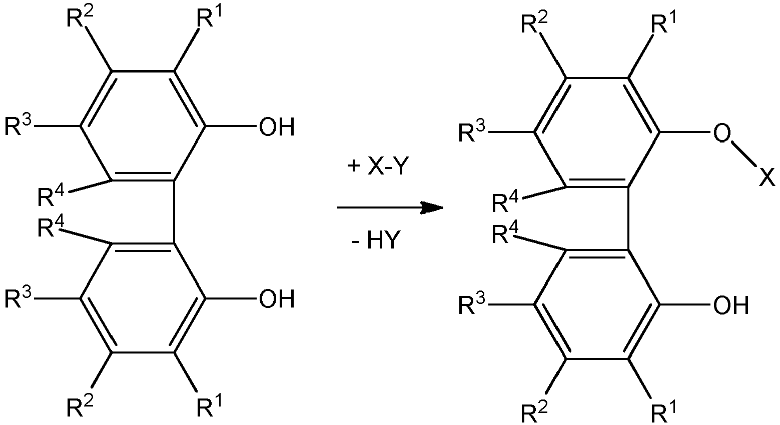
b1) 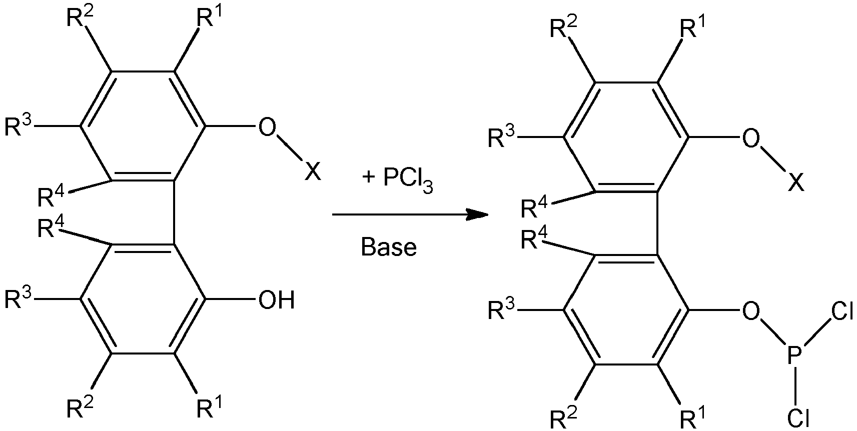
c1) 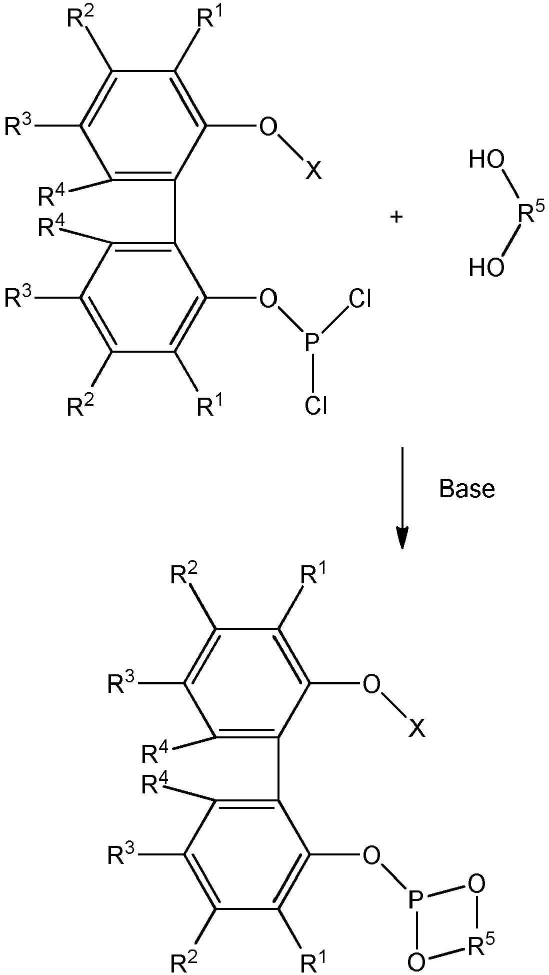 wobei
R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
R⁵ ausgewählt ist aus: -(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-, -(C₄-C₂₀)-Heteroaryl-, -(C₆-C₂₀ )-Aryl-CO-( C₆-C₂₀)-Aryl-,
wobei die Arylgruppen auch miteinander verknüpft sein können, sodass R⁵ für ein Biaryl steht;
X für -COO-*tert*.Butyl steht;
und Y für ein entsprechendes Gegenion zu X steht;
wobei bezogen auf das Biphenol nur ein Äquivalent X-Y eingesetzt wird.

2. Verfahren nach Anspruch 1,
umfassend die Verfahrensschritte:
a) 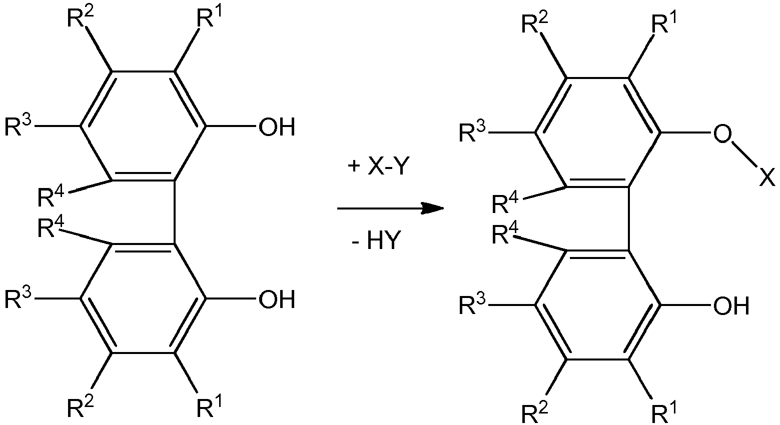
b1) 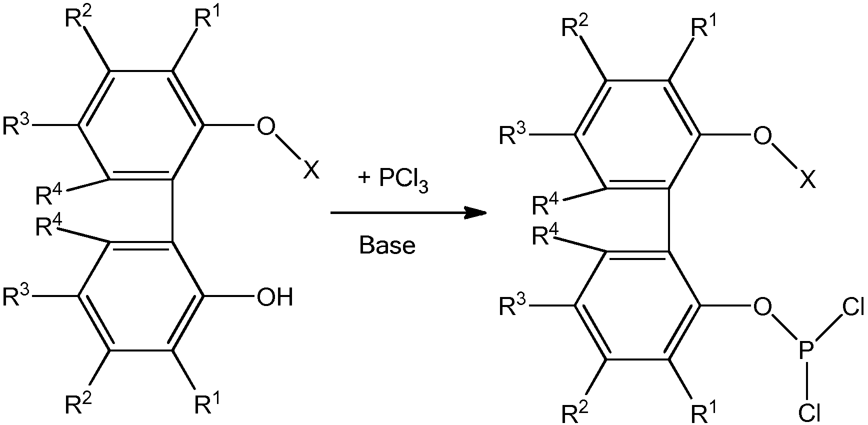
c1') 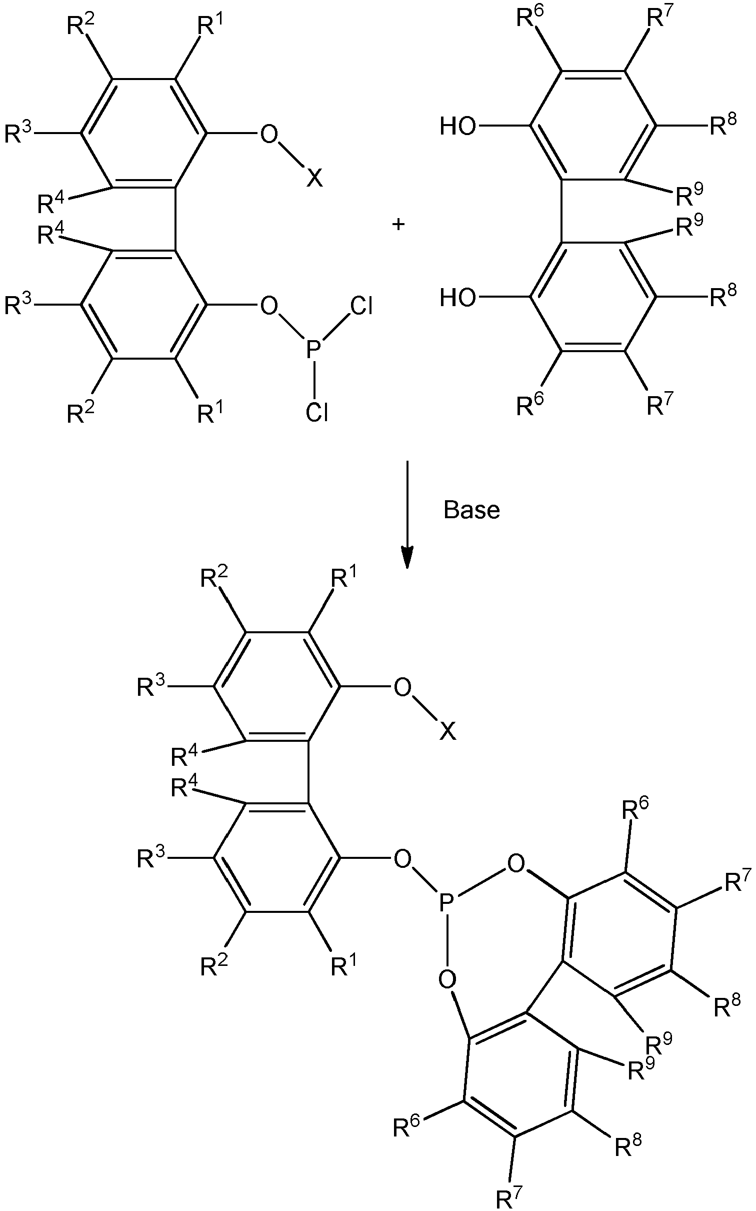 wobei
R⁶, R⁷, R⁸, R⁹ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂.

3. Verfahren umfassend die Verfahrensschritte:
a) 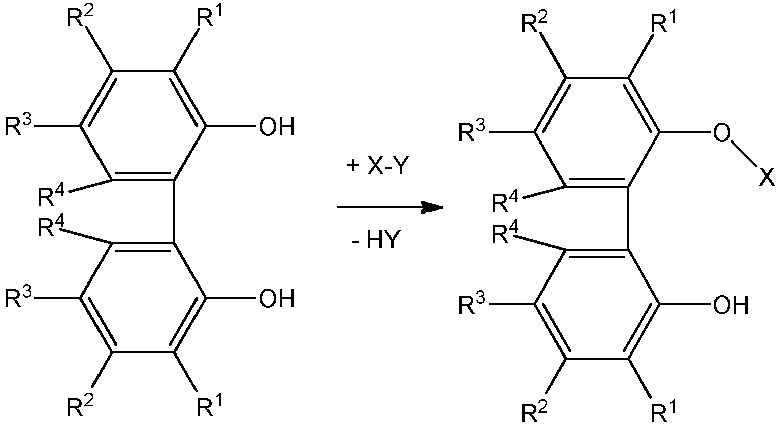
b2) 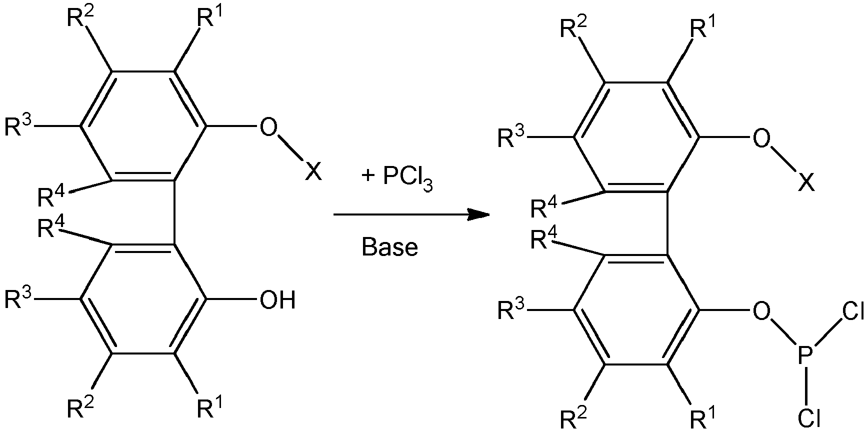
c2) 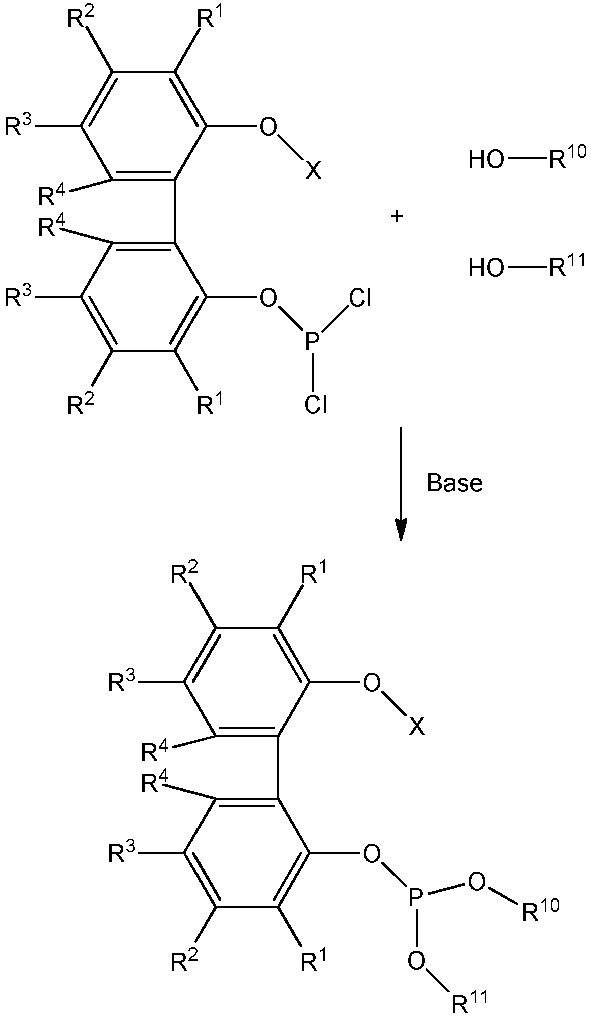 wobei
R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
R¹⁰ und R¹¹ jeweils unabhängig voneinander ausgewählt sind aus: -(C₁-C₁₂)-Alkyl, -(C₆-C₂₀)-Aryl, -(C₆-C₂₀)-Aryl-(C₁-C₁₂)-Alkyl, -(C₆-C₂₀)-Aryl-O-(C₁-C₁₂)-Alkyl, -(C₁-C₁₂)-Alkyl-(C₆-C₂₀)-Aryl, -(C₆-C₂₀)-Aryl-COO-(C₁-C₁₂)-Alkyl, -(C₆-C₂₀)-Aryl-CONH-(C₁-C₁₂)-Alkyl, -(C₆-C₂₀)-Aryl-CON[(C₁-C₁₂)-Alkyl]₂, -(C₄-C₂₀)-Heteroaryl, -(C₄-C₂₀)-Heteroaryl-(C₁-C₁₂)-Alkyl, -(C₅-C₈)-Cycloalkyl, -(C₆-C₂₀)-Aryl-CO-(C₆-C₂₀)-Aryl,
X für -COO-tert.Butyl steht;
und Y für ein entsprechendes Gegenion zu X steht;
wobei bezogen auf das Biphenol nur ein Äquivalent X-Y eingesetzt wird.

4. Verfahren nach Anspruch 3,
umfassend die Verfahrensschritte:
a) 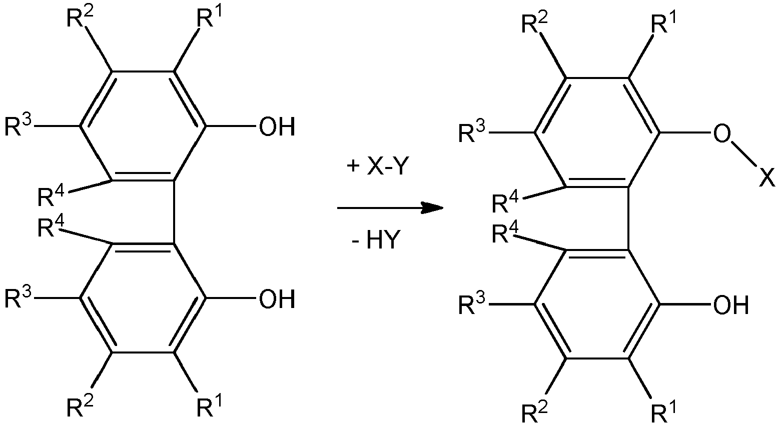
b2) 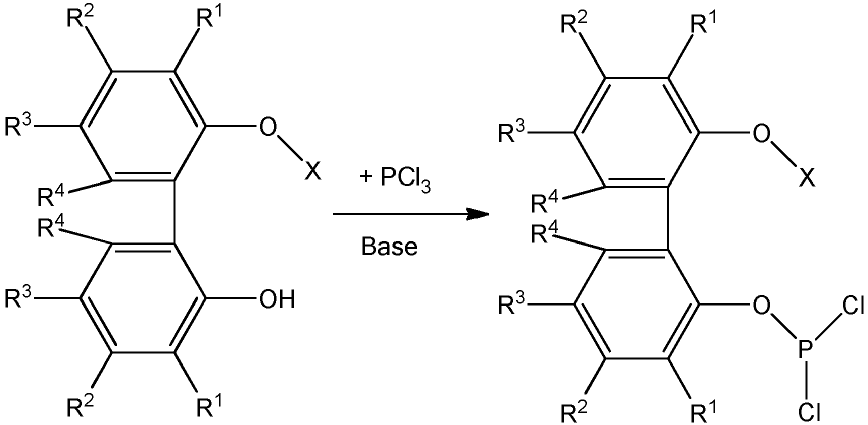
c2') 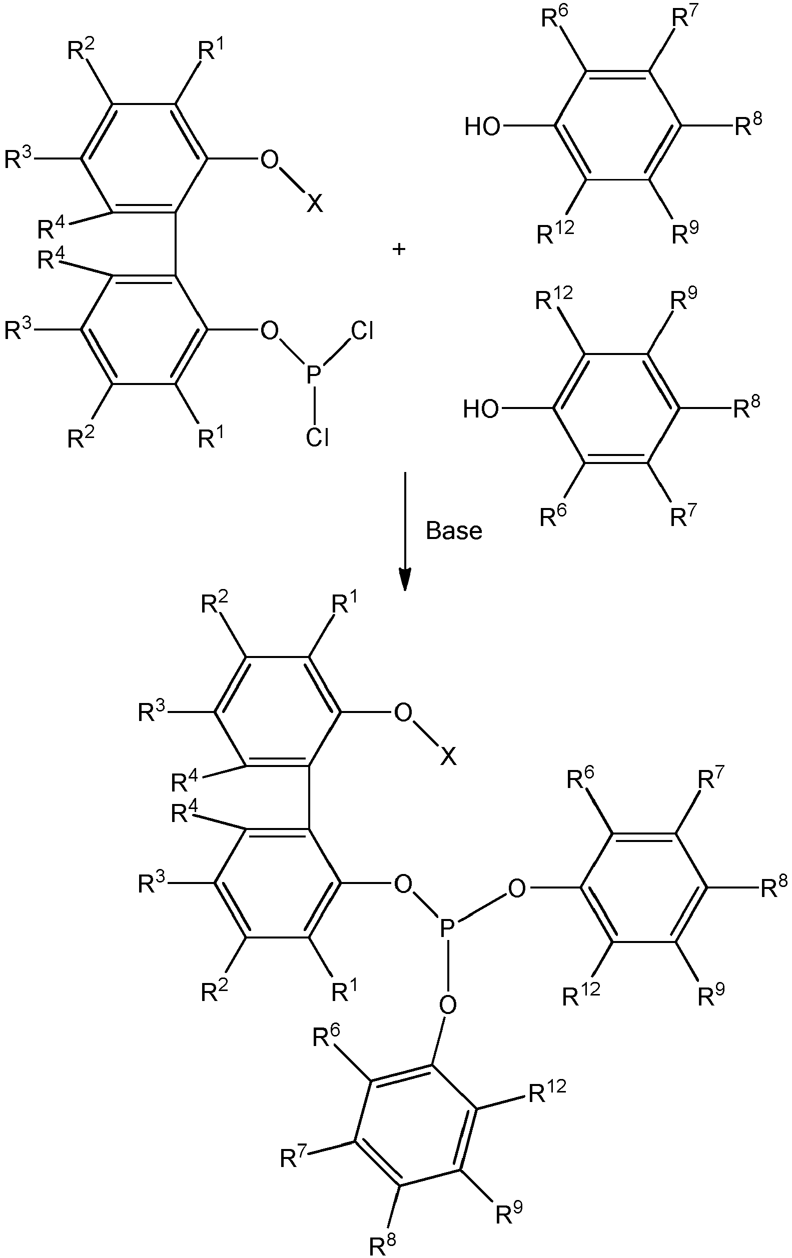 wobei -H, -(C₁-C₁₂)-Alkyl, -O-(C₁-C₁₂)-Alkyl, -O-(C₆-C₂₀)-Aryl, -(C₆-C₂₀)-Aryl, Halogen (wie Cl, F, Br, I), COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
R⁶, R⁷, R⁸, R⁹, R¹² jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, -SO₃H; -SO₃Na, - NH₂; -N[(C₁-C₁₂)-Alkyl]₂;

5. Verfahren umfassend die Verfahrensschritte:
a) 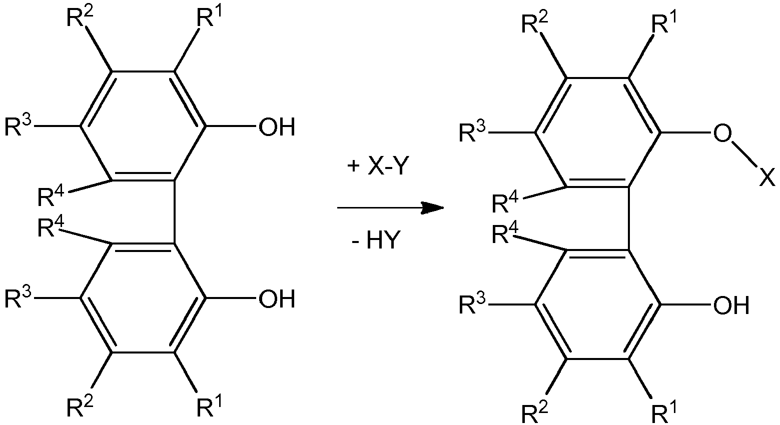
b3) 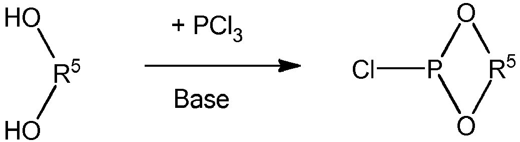
c3) 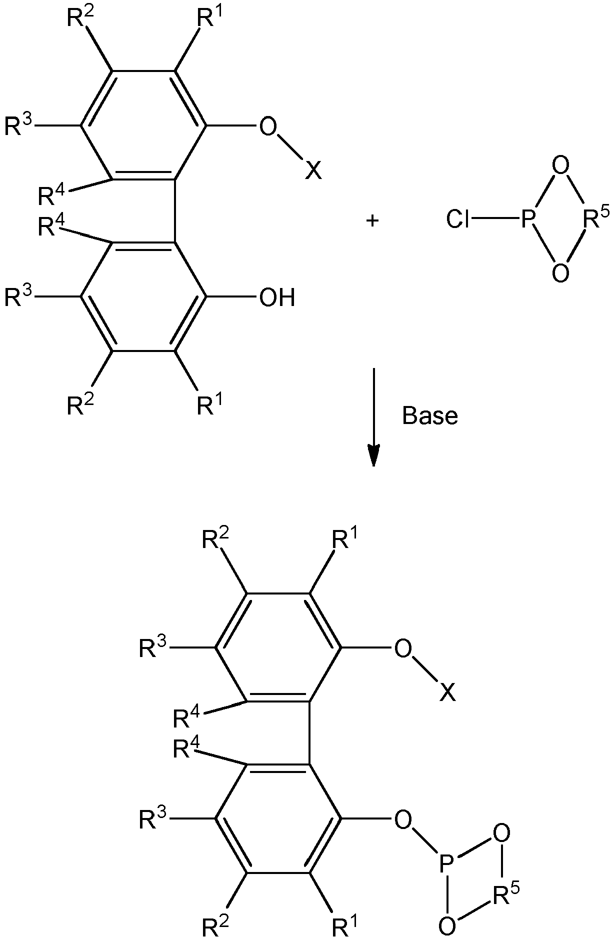 wobei
R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;
R⁵ ausgewählt ist aus: -(C₁-C₁₂)-Alkyl-, -(C₆-C₂₀)-Aryl-, -(C₆-C₂₀)-Aryl-(C₁-C₁₂)-Alkyl-, -(C₁-C₁₂)-Alkyl-(C₆-C₂₀)-Aryl-, -(C₄-C₂₀)-Heteroaryl-, -(C₆-C₂₀)-Aryl-CO-(C₆-C₂₀)-Aryl-;
X für -COO-tert.Butyl steht;
und Y für ein entsprechendes Gegenion zu X steht;
wobei bezogen auf das Biphenol nur ein Äquivalent X-Y eingesetzt wird.

6. Verfahren nach Anspruch 5,
umfassend die Verfahrensschritte:
a) 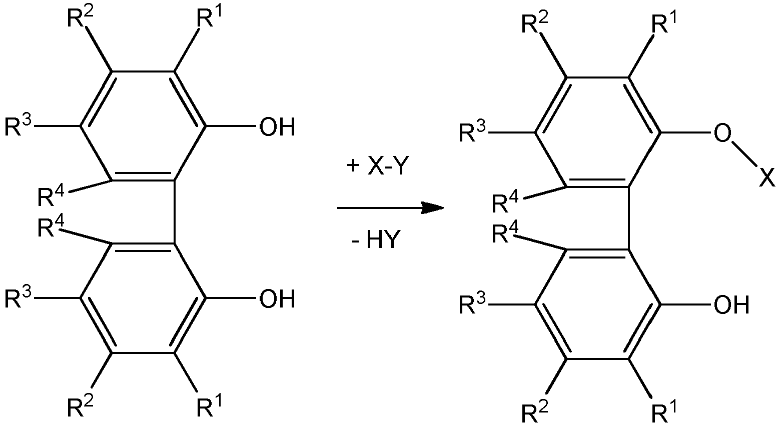
b3') 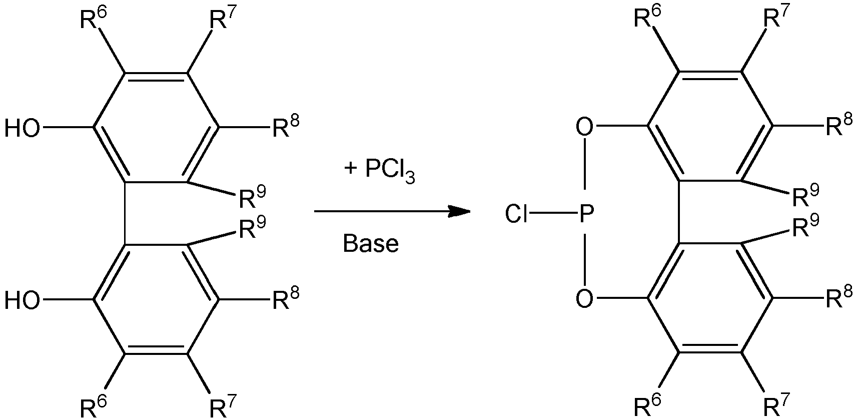
c3') 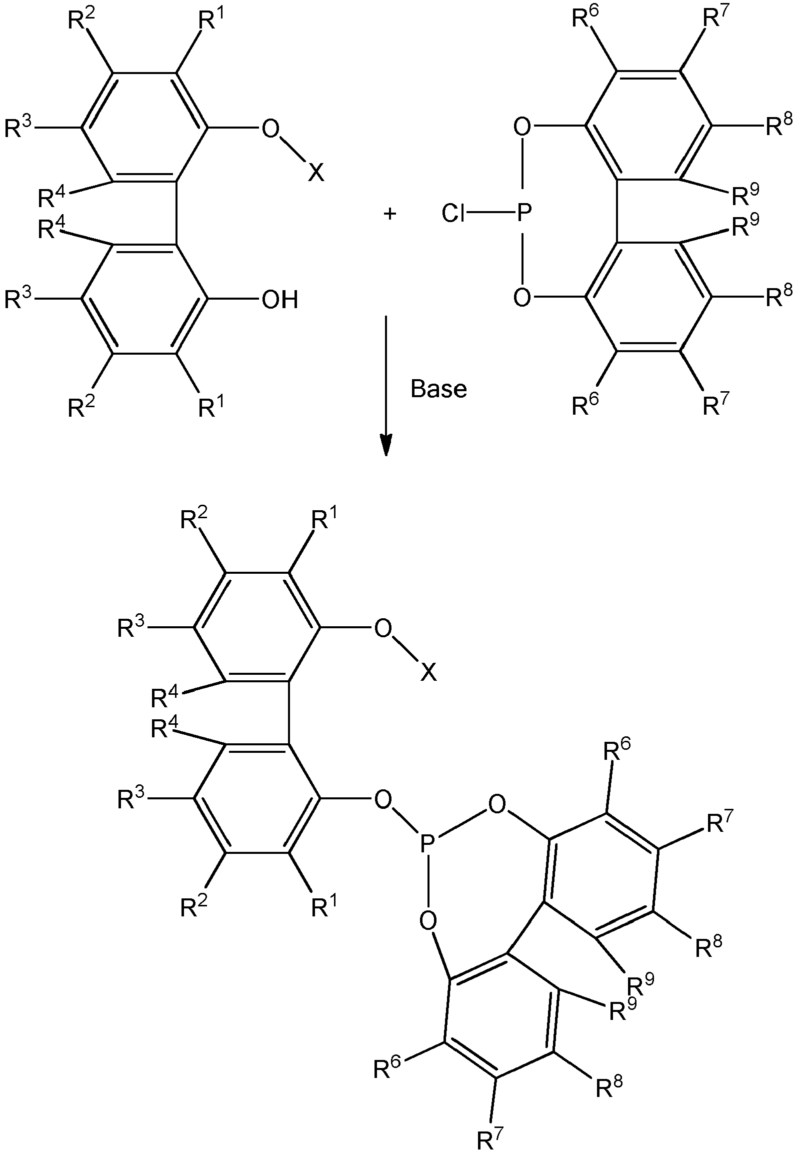 wobei
R⁶, R⁷, R⁸, R⁹ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, COO-(C₁-C₁₂)-Alkyl, CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl,-COOH, -OH, -SO₃H; -SO₃Na, -NO₂, -CN, -NH₂; -N[(C₁-C₁₂)-Alkyl]₂;

7. Verfahren nach einem der Ansprüche 1 bis 6,
wobei die Base ausgewählt ist aus: Triethylamin, Dibutylamin, Dimethylaminobutan, Pyridin, Dimethylaminopyridin, *N*-Methyl-2-pyrrolidon, Kalium-tert-butylat, Natrium-methylat, n-Butyllithium.

8. Verfahren nach einem der Ansprüche 1 bis 7,
wobei R¹, R², R³, R⁴ jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -NH₂, -N[(C₁-C₁₂)-Alkyl]₂.

9. Verfahren nach einem der Ansprüche 1 bis 8,
wobei R¹, R², R³, R⁴ jeweils unabhängig voneinander ausgewählt sind aus: -H, -(C₁-C₁₂)-Alkyl, -O-(C₁-C₁₂)-Alkyl, -(C₆-C₂₀)-Aryl, -COO-(C₁-C₁₂)-Alkyl, - N[(C₁-C₁₂)-Alkyl]₂.

10. Verfahren nach einem der Ansprüche 1 oder 5,
wobei R⁵ ausgewählt ist aus: -(C₁-C₁₂)-Alkyl-, -(C₆-C₂₀)-Aryl-, -(C₆-C₂₀)-Aryl-(C₁-C₁₂)-Alkyl-, -(C₆-C₂₀ )-Aryl-CO-(C₆-C₂₀)-Aryl-, - (C₁-C₁₂)-Alkyl-(C₆-C₂₀)-Aryl-.

11. Verfahren nach einem der Ansprüche 2 oder 4,
wobei R⁶, R⁷, R⁸, R⁹, R¹² jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, -COO-(C₁-C₁₂)-Alkyl, - CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -NH₂, -N[(C₁-C₁₂)-Alkyl]₂.

12. Verfahren nach einem der Ansprüche 2 oder 4,
wobei R⁶, R⁷, R⁸, R⁹, R¹² jeweils unabhängig voneinander ausgewählt sind aus: -H, -(C₁-C₁₂)-Alkyl, -O-(C₁-C₁₂)-Alkyl.

## Claims

1. Process comprising the following process steps:
a) 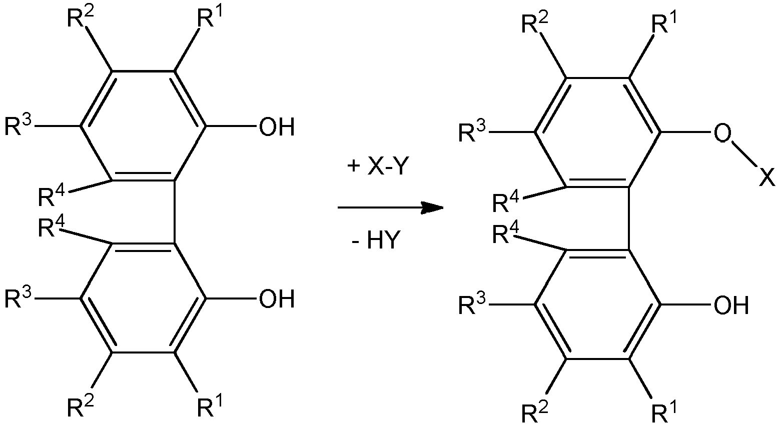
b1) 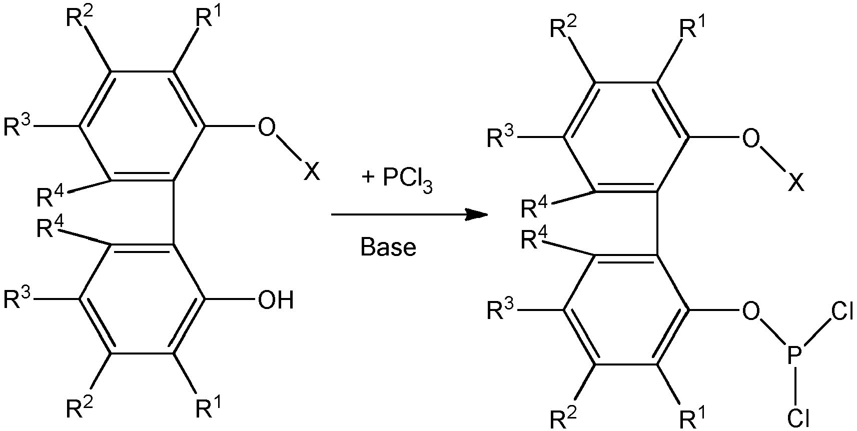
c1) 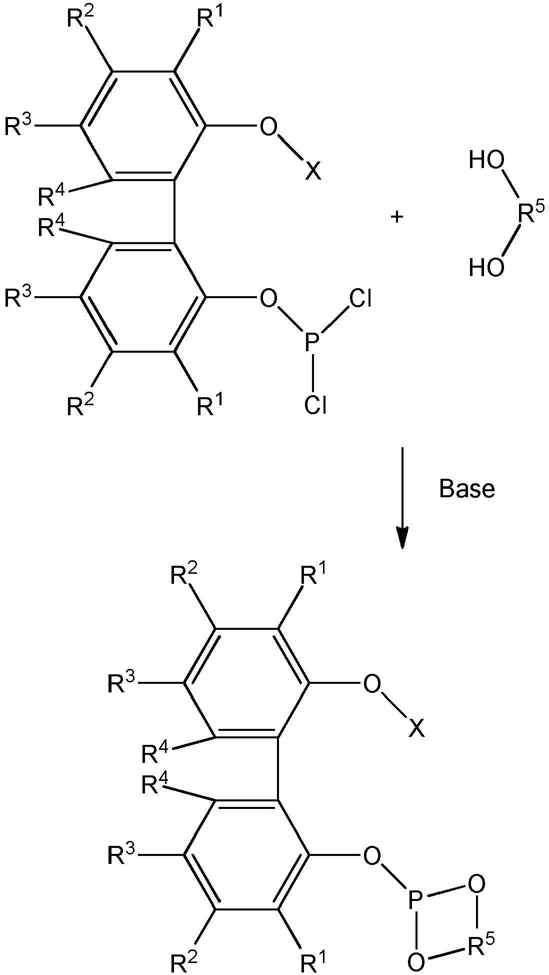 where
R¹, R², R³, R⁴ are each independently selected from: -H, -(C₁-C₁₂)-alkyl, -O-(C₁-C₁₂)-alkyl, -O-(C₆-C₂₀)-aryl, -(C₆-C₂₀)-aryl, halogen, COO-(C₁-C₁₂)-alkyl, CONH- (C₁-C₁₂)-alkyl, -(C₆-C₂₀)-aryl-CON[(C₁-C₁₂)-alkyl]₂, -CO-(C₁-C₁₂)-alkyl, -CO-(C₆-C₂₀)-aryl, -COOH, -OH, -SO₃H, -SO₃Na, -NO₂, -CN, -NH₂, -N[(C₁-C₁₂)-alkyl]₂;
R⁵ is selected from: -(C₁-C₁₂)-alkyl-, -(C₆-C₂₀)-aryl-, - (C₆-C₂₀)-aryl- (C₁-C₁₂)-alkyl-, -(C₁-C₁₂)-alkyl- (C₆-C₂₀)-aryl-, -(C₄-C₂₀)-heteroaryl-, -(C₆-C₂₀)-aryl-CO-(C₆-C₂₀)-aryl,
where the aryl groups may also be linked with one another, so that R⁵ is a biaryl;
X is -COO-tert-butyl;
and Y is a corresponding counterion to X;
where, based on the biphenol, only one equivalent of X-Y is used.

2. Process according to Claim 1,
comprising the following process steps:
a) 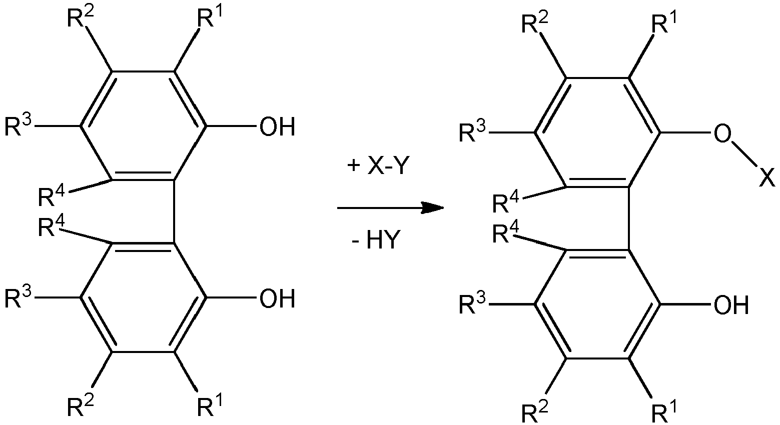
b1) 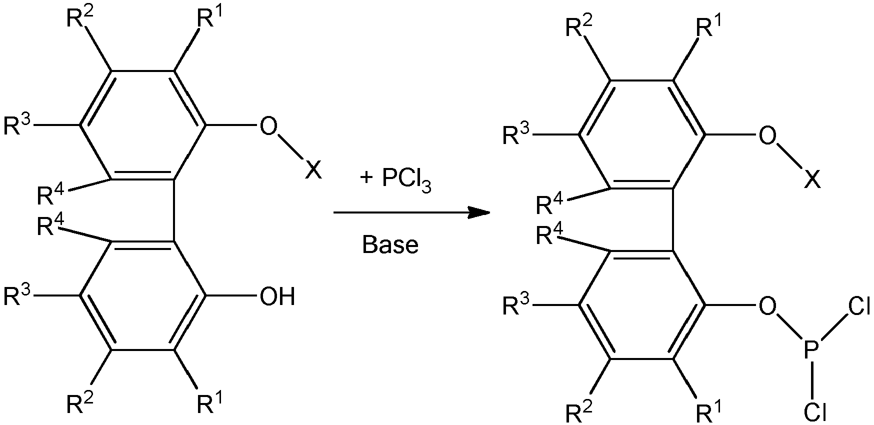
c1') 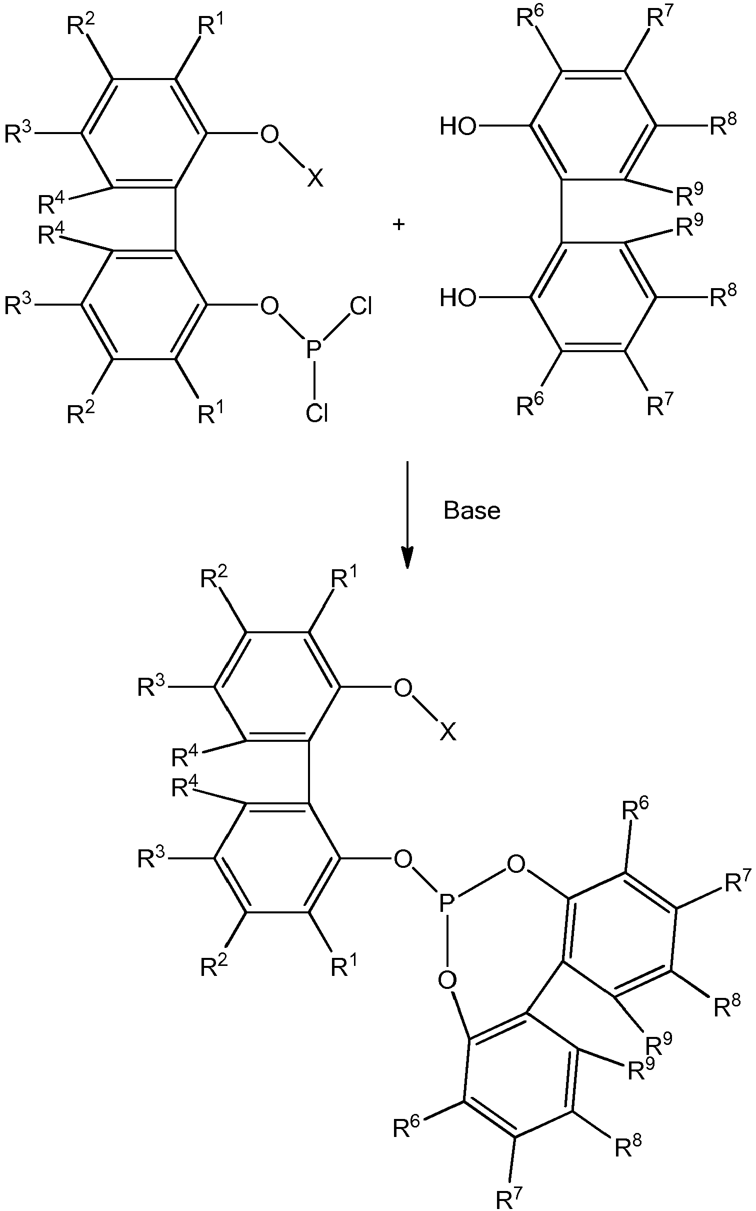 where
R⁶, R⁷, R⁸, R⁹ are each independently selected from: -H, -(C₁-C₁₂)-alkyl, -O-(C₁-C₁₂)-alkyl, -O-(C₆-C₂₀)-aryl, -(C₆-C₂₀)-aryl, halogen, COO-(C₁-C₁₂)-alkyl, CONH-(C₁-C₁₂)-alkyl, -(C₆-C₂₀)-aryl-CON [(C₁-C₁₂)-alkyl]₂, -CO-(C₁-C₁₂)-alkyl, -CO-(C₆-C₂₀)-aryl, -COOH, -OH, -SO₃H, -SO₃Na, -NO₂, -CN, -NH₂, -N[(C₁-C₁₂)-alkyl]₂.

3. Process comprising the following process steps:
a) 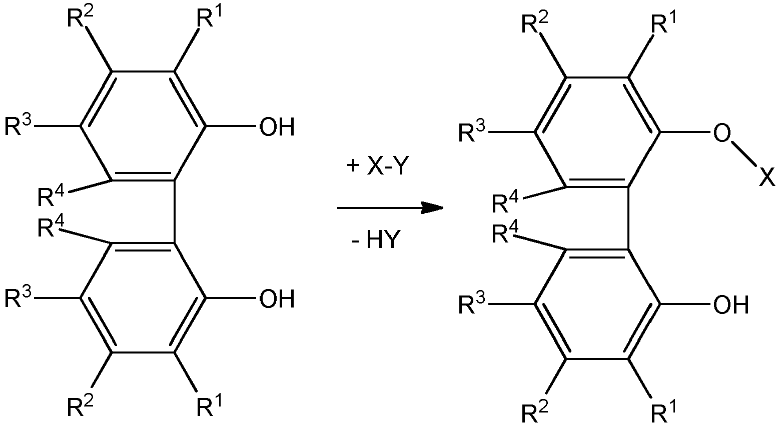
b2) 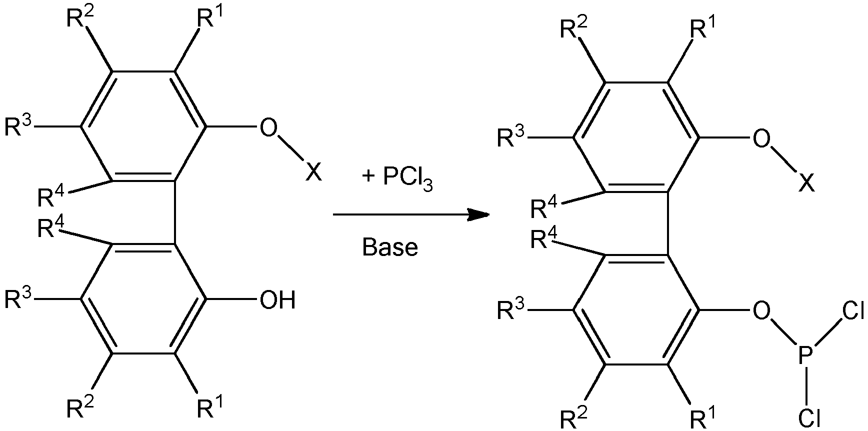
c2) 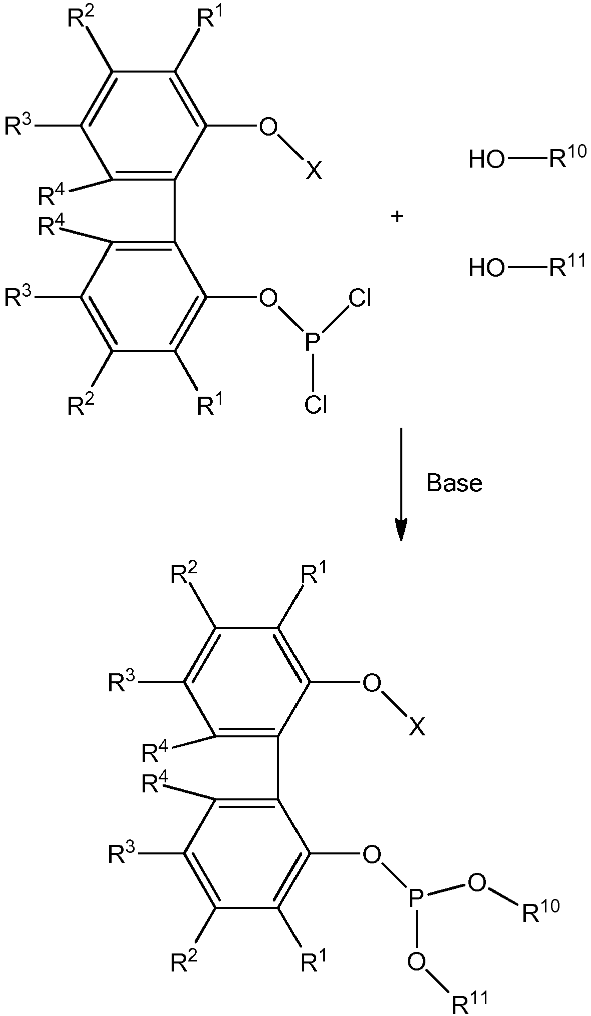 where
R¹, R², R³, R⁴ are each independently selected from: -H, - (C₁-C₁₂)-alkyl, -O-(C₁-C₁₂)-alkyl, -O-(C₆-C₂₀)-aryl, -(C₆-C₂₀)-aryl, halogen, COO-(C₁-C₁₂)-alkyl, CONH-(C₁-C₁₂)-alkyl, -(C₆-C₂₀)-aryl-CON[(C₁-C₁₂)-alkyl]₂, -CO-(C₁-C₁₂)-alkyl, -CO-(C₆-C₂₀)-aryl, -COOH, -OH, -SO₃H, -SO₃Na, -NO₂, -CN, -NH₂, -N[(C₁-C₁₂)-alkyl]₂;
R¹⁰ and R¹¹ are each independently selected from: -(C₁-C₁₂)-alkyl, -(C₆-C₂₀)-aryl, -(C₆-C₂₀)-aryl- (C₁-C₁₂)-alkyl, -(C₆-C₂₀)-aryl-O-(C₁-C₁₂)-alkyl, -(C₁-C₁₂)-alkyl-(C₆-C₂₀)-aryl, -(C₆-C₂₀)-aryl-COO-(C₁-C₁₂)-alkyl, -(C₆-C₂₀)-aryl-CONH-(C₁-C₁₂)-alkyl, -(C₆-C₂₀)-aryl-CON[(C₁-C₁₂)-alkyl]₂, - (C₄-C₂₀)-heteroaryl, -(C₄-C₂₀)-heteroaryl-(C₁-C₁₂)-alkyl, -(C₅-C₈)-cycloalkyl, -(C₆-C₂₀)-aryl-CO-(C₆-C₂₀)-aryl,
X is -COO-tert-butyl-;
and Y is a corresponding counterion to X;
where, based on the biphenol, only one equivalent of X-Y is used.

4. Process according to Claim 3,
comprising the following process steps:
a) 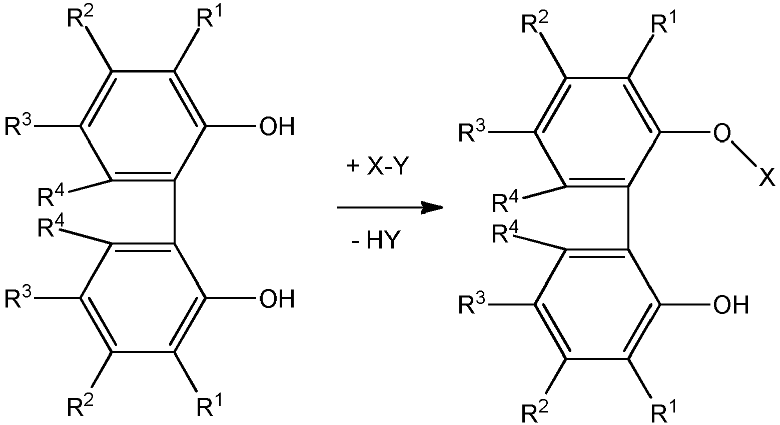
b2) 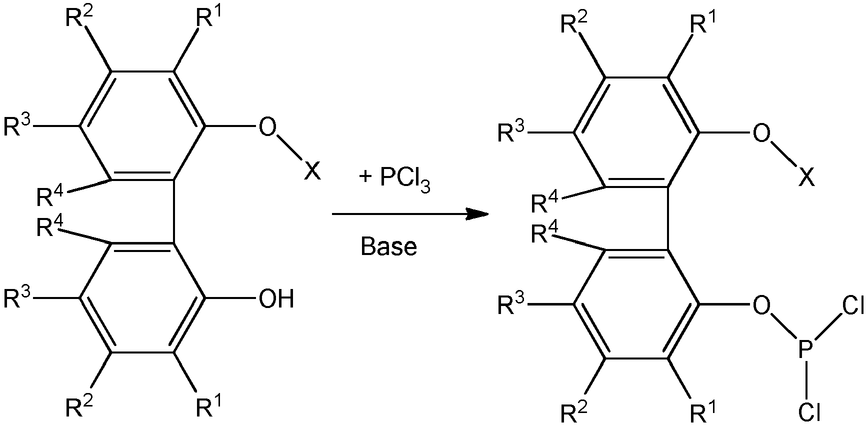
c2') 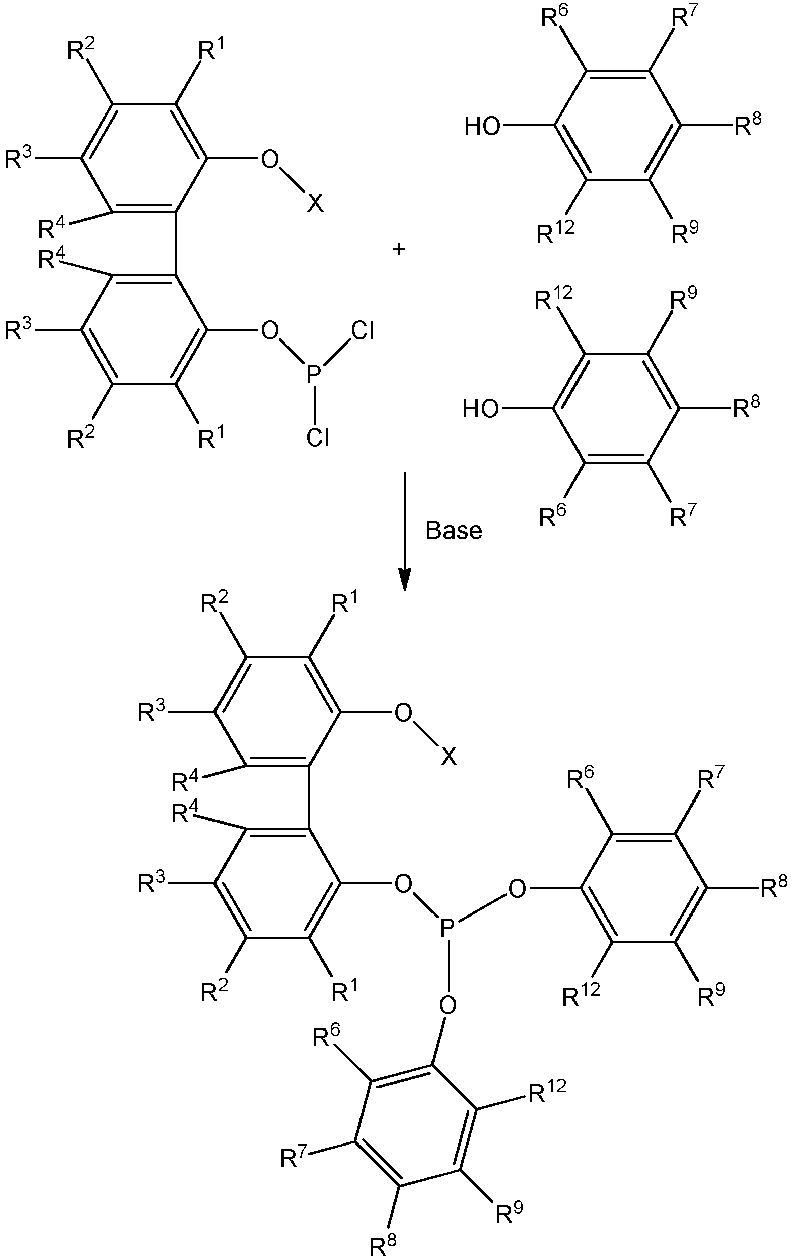 where -H, -(C₁-C₁₂)-alkyl, -O-(C₁-C₁₂)-alkyl, -O-(C₆-C₂₀)-aryl, -(C₆-C₂₀)-aryl, halogen (such as Cl, F, Br, I), COO-(C₁-C₁₂)-alkyl, CONH- (C₁-C₁₂)-alkyl, -(C₆-C₂₀)-aryl-CON[(C₁-C₁₂)-alkyl]₂, -CO-(C₁-C₁₂)-alkyl, -CO-(C₆-C₂₀)-aryl, - COOH, -OH, -SO₃H, -SO₃Na, -NO₂, -CN, -NH₂, -N[(C₁-C₁₂)-alkyl]₂;
where R⁶, R⁷, R⁸, R⁹, R¹² are each independently selected from: -H, -(C₁-C₁₂)-alkyl, -O-(C₁-C₁₂)-alkyl, -O-(C₆-C₂₀)-aryl, -(C₆-C₂₀)-aryl, halogen, -SO₃H, -SO₃Na, -NH₂, -N[(C₁-C₁₂)-alkyl]₂.

5. Process comprising the following process steps:
a) 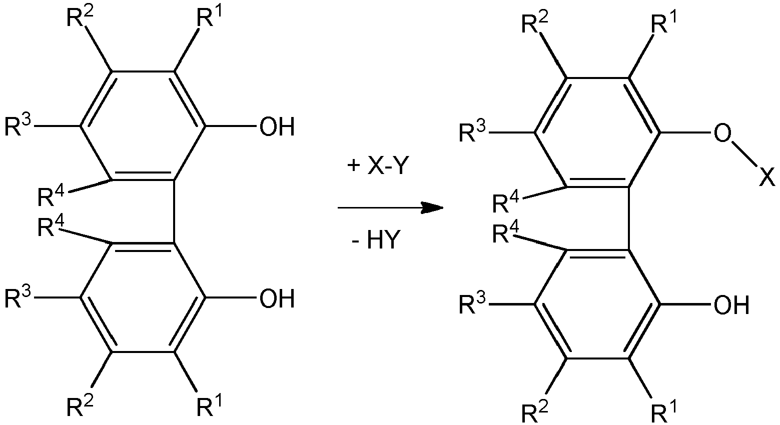
b3) 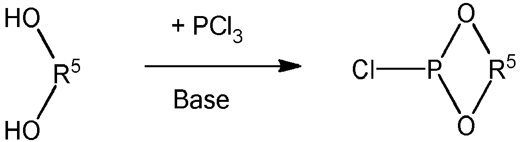 c3) 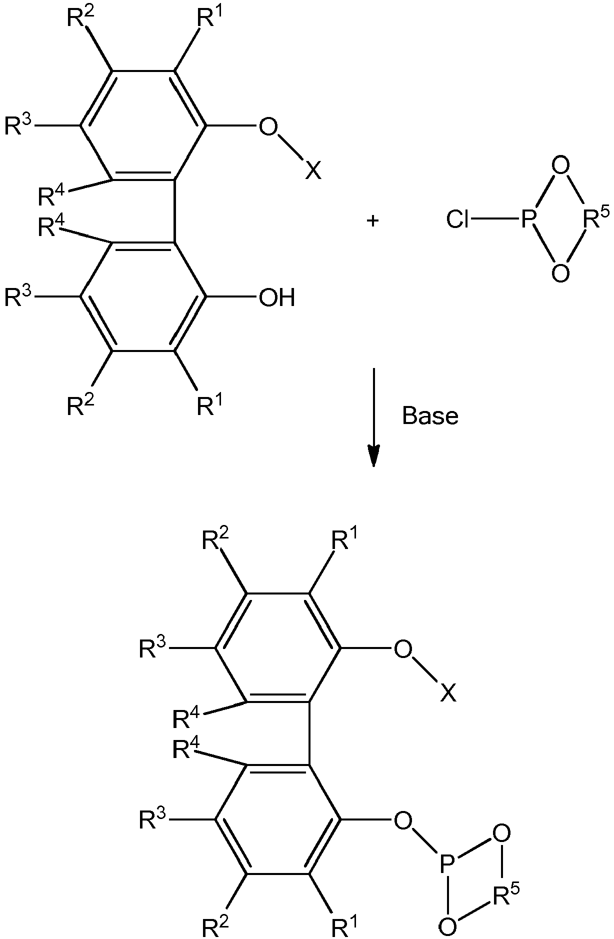 where
R¹, R², R³, R⁴ are each independently selected from: -H, -(C₁-C₁₂)-alkyl, -O-(C₁-C₁₂)-alkyl, -O-(C₆-C₂₀)-aryl, -(C₆-C₂₀)-aryl, halogen, COO-(C₁-C₁₂)-alkyl, CONH-(C₁-C₁₂)-alkyl, -(C₆-C₂₀)-aryl-CON [(C₁-C₁₂)-alkyl]₂, -CO-(C₁-C₁₂)-alkyl, -CO-(C₆-C₂₀)-aryl, -COOH, -OH, -SO₃H, -SO₃Na, -NO₂, -CN, -NH₂, -N[(C₁-C₁₂)-alkyl]₂;
R⁵ is selected from: -(C₁-C₁₂)-alkyl-, -(C₆-C₂₀)-aryl-, -(C₆-C₂₀)-aryl-(C₁-C₁₂)-alkyl-, -(C₁-C₁₂)-alkyl- (C₆-C₂₀)-aryl-, -(C₄-C₂₀)-heteroaryl-, -(C₆-C₂₀)-aryl-CO- (C₆-C₂₀)-aryl-;
X is -COO-tert-butyl;
and Y is a corresponding counterion to X;
where, based on the biphenol, only one equivalent of X-Y is used.

6. Process according to Claim 5,
comprising the following process steps:
a) 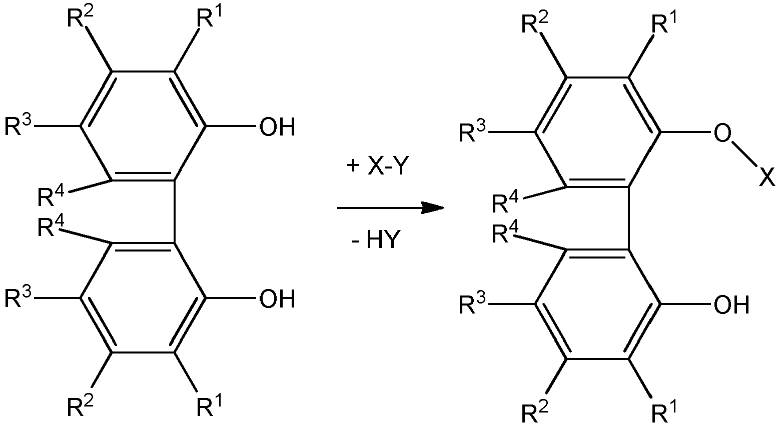
b3') 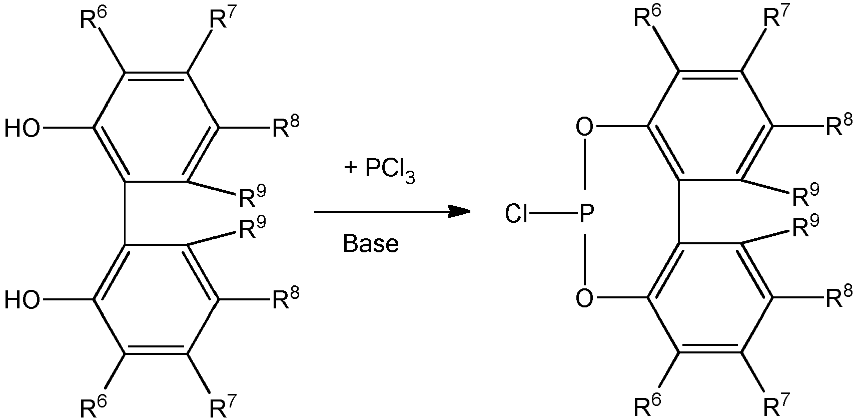
c3') 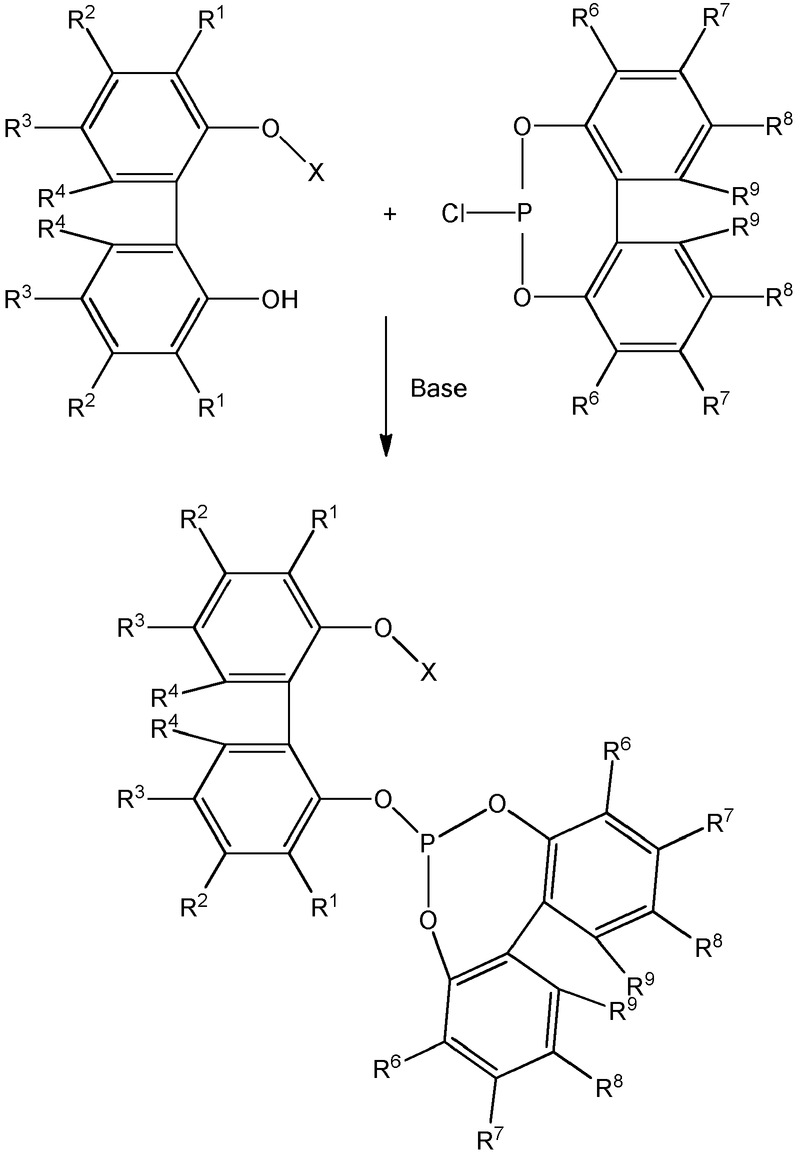 where
R⁶, R⁷, R⁸, R⁹ are each independently selected from: -H, -(C₁-C₁₂)-alkyl, -O-(C₁-C₁₂)-alkyl, -O-(C₆-C₂₀)-aryl, -(C₆-C₂₀)-aryl, halogen, COO-(C₁-C₁₂)-alkyl, CONH-(C₁-C₁₂)-alkyl, -(C₆-C₂₀)-aryl-CON[(C₁-C₁₂)-alkyl]₂, -CO-(C₁-C₁₂)-alkyl, -CO-(C₆-C₂₀)-aryl, -COOH, -OH, -SO₃H, -SO₃Na, -NO₂, -CN, -NH₂, -N[(C₁-C₁₂)-alkyl]₂.

7. Process according to any of Claims 1 to 6,
wherein the base is selected from: triethylamine, dibutylamine, dimethylaminobutane, pyridine, dimethylaminopyridine, N-methyl-2-pyrrolidone, potassium tert-butoxide, sodium methoxide and n-butyllithium.

8. Process according to any of Claims 1 to 7,
wherein R¹, R², R³ and R⁴ are each independently selected from: -H, -(C₁-C₁₂)-alkyl, -O-(C₁-C₁₂)-alkyl, -O-(C₆-C₂₀)-aryl, -(C₆-C₂₀)-aryl, -COO-(C₁-C₁₂)-alkyl, -CONH-(C₁-C₁₂)-alkyl, -(C₆-C₂₀)-aryl-CON[(C₁-C₁₂)-alkyl]₂, -CO-(C₁-C₁₂)-alkyl, - CO-(C₆-C₂₀)-aryl, -COOH, -OH, -NH₂, -N[(C₁-C₁₂)-alkyl]₂.

9. Process according to any of Claims 1 to 8,
wherein R¹, R², R³ and R⁴ are each independently selected from: -H, -(C₁-C₁₂)-alkyl, -O-(C₁-C₁₂)-alkyl, -(C₆-C₂₀)-aryl, - COO-(C₁-C₁₂)-alkyl, -N[(C₁-C₁₂)-alkyl]₂.

10. Process according to either of Claims 1 and 5,
wherein R⁵ is selected from: -(C₁-C₁₂)-alkyl, -(C₆-C₂₀)-aryl, -(C₆-C₂₀)-aryl-(C₁-C₁₂)-alkyl, -(C₆-C₂₀)-aryl-CO- (C₆-C₂₀)-aryl, -(C₁-C₁₂)-alkyl-(C₆-C₂₀)-aryl-.

11. Process according to either of Claims 2 and 4,
wherein R⁶, R⁷, R⁸, R⁹, R¹² are each independently selected from: -H, -(C₁-C₁₂)-alkyl, -O-(C₁-C₁₂)-alkyl, -O-(C₆-C₂₀)-aryl, -(C₆-C₂₀)-aryl, -COO-(C₁-C₁₂)-alkyl, -CONH-(C₁-C₁₂)-alkyl, -(C₆-C₂₀)-aryl-CON [(C₁-C₁₂)-alkyl]₂, -CO-(C₁-C₁₂)-alkyl, - CO-(C₆-C₂₀)-aryl, -COOH, -OH, -NH₂, -N[(C₁-C₁₂)-alkyl]₂.

12. Process according to either of Claims 2 and 4,
wherein R⁶, R⁷, R⁸, R⁹, R¹² are each independently selected from:
-H, -(C₁-C₁₂)-alkyl, -O-(C₁-C₁₂)-alkyl.

## Revendications

1. Procédé comprenant les étapes de procédé :
a) 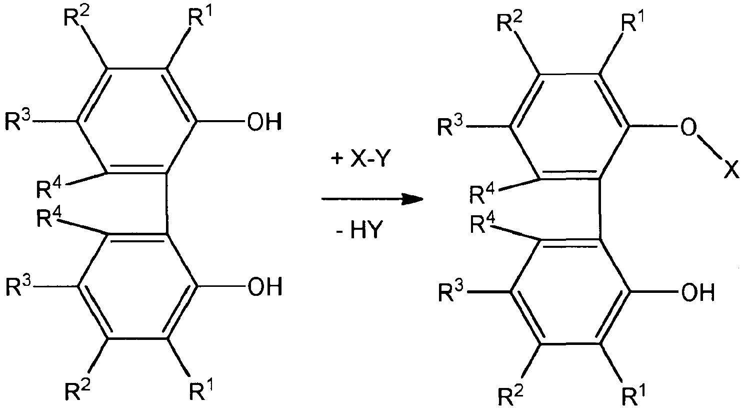
b1) 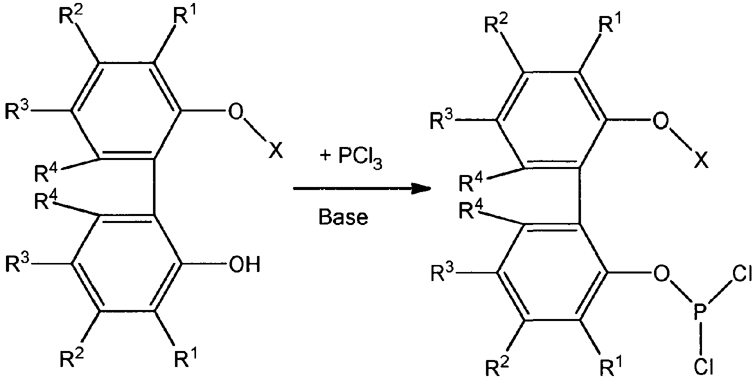
c1) 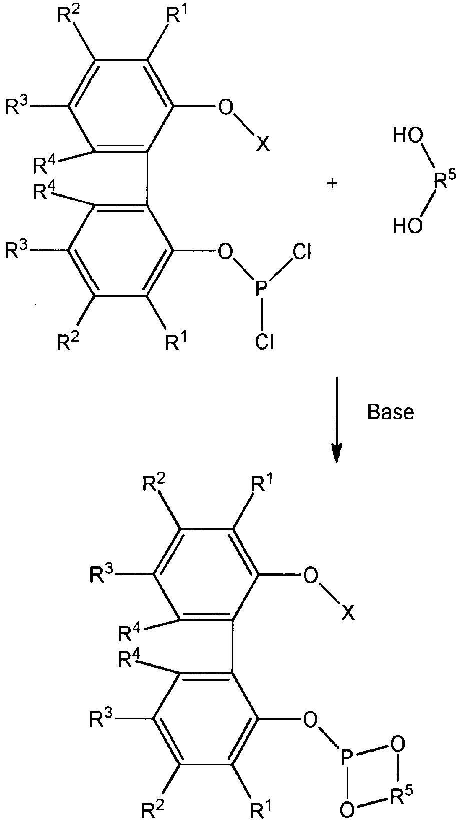 où
R¹, R², R³, R⁴ sont choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, halogène, COO-(C₁-C₁₂)-alkyle, CONH- (C₁-C₁₂)-alkyle, -(C₆-C₂₀)-aryl-CON [(C₁-C₁₂)-alkyle]₂, -CO-(C₁-C₁₂)-alkyle, -CO-(C₆-C₂₀)-aryle, -COOH, -OH, -SO₃H ; -SO₃Na, -NO₂, -CN, -NH₂ ; -N[(C₁-C₁₂)-alkyle]₂ ;
R⁵ est choisi parmi : -(C₁-C₁₂)-alkyl-, -(C₆-C₂₀)-aryl-, -(C₆-C₂₀)-aryl-(C₁-C₁₂)-alkyl-, -(C₁-C₁₂)-alkyl-(C₆-C₂₀)-aryl-, -(C₄-C₂₀)-hétéroaryl-, -(C₆-C₂₀)-aryl-CO-(C₆-C₂₀)-aryl-,
les groupes aryle pouvant également être liés l'un à l'autre de telle sorte que R⁵ représente diaryle ;
X représente -COO-tert-butyle ;
et Y représente un contre-ion correspondant par rapport à X ;
un seul équivalent X-Y étant utilisé par rapport au diphénol.

2. Procédé selon la revendication 1, comprenant les étapes de procédé :
a) 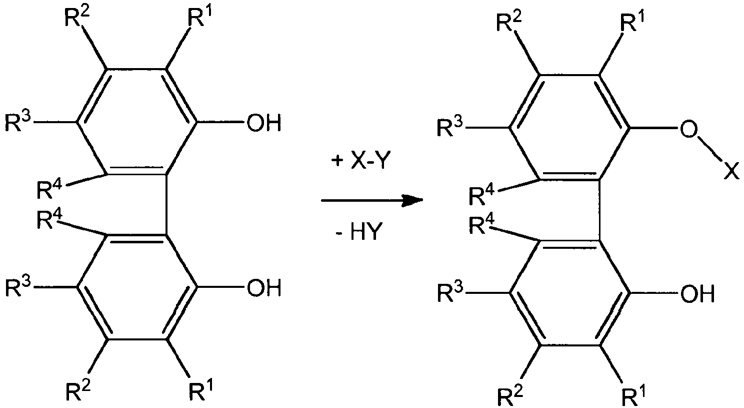
b1) 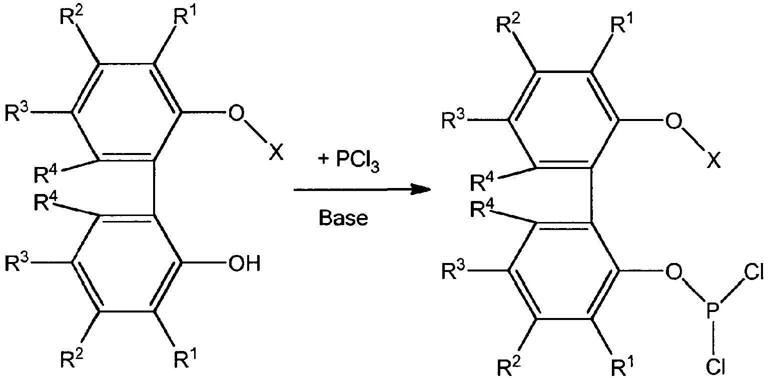
c1') 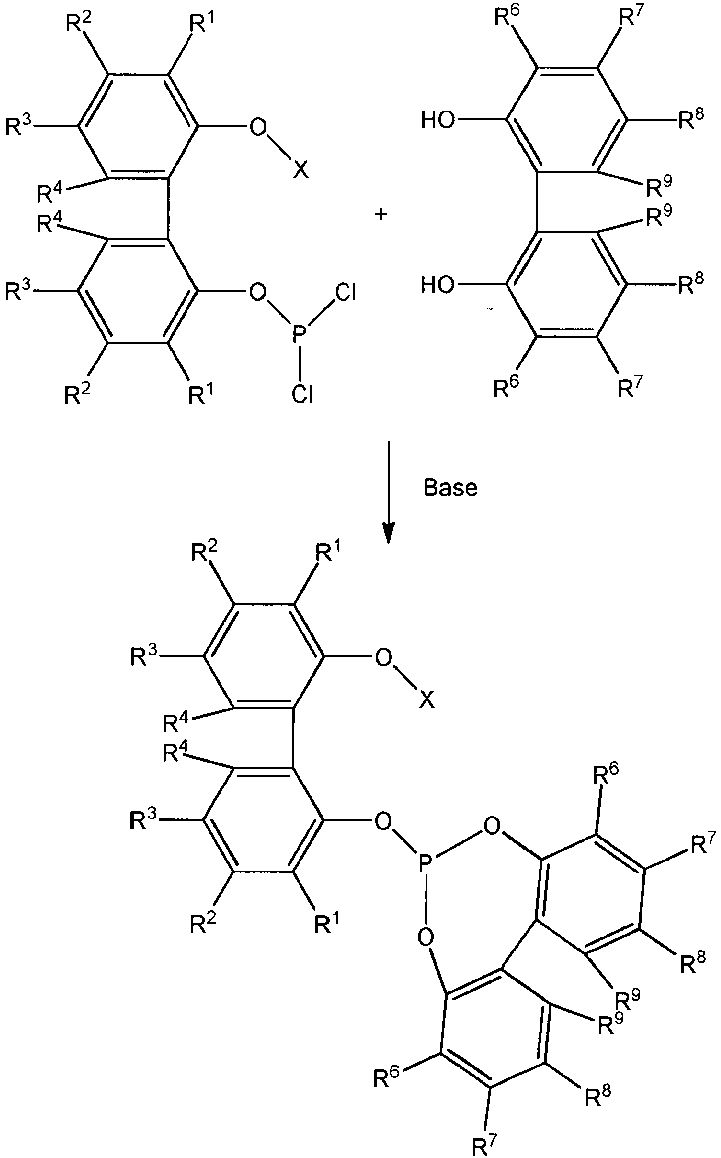 où
R⁶, R⁷, R⁸, R⁹ sont choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, halogène, COO-(C₁-C₁₂)-alkyle, CONH- (C₁-C₁₂)-alkyle, -(C₆-C₂₀)-aryl-CON[(C₁-C₁₂)-alkyle]₂, -CO-(C₁-C₁₂)-alkyle, -CO-(C₆-C₂₀)-aryle, -COOH, -OH, -SO₃H ; -SO₃Na, -NO₂, -CN, -NH₂ ; -N[(C₁-C₁₂)-alkyle] ₂.

3. Procédé comprenant les étapes de procédé :
a) 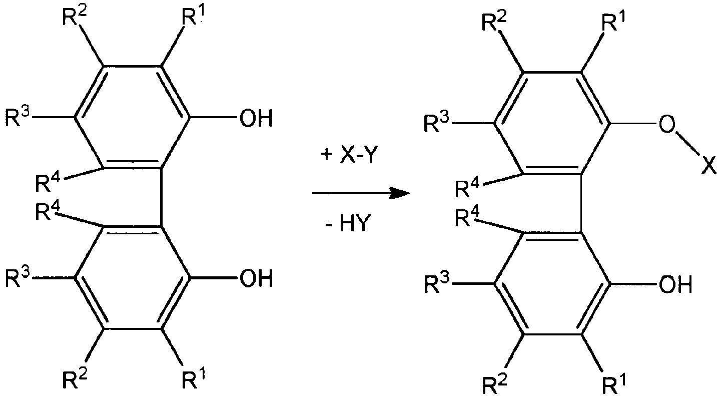
b2) 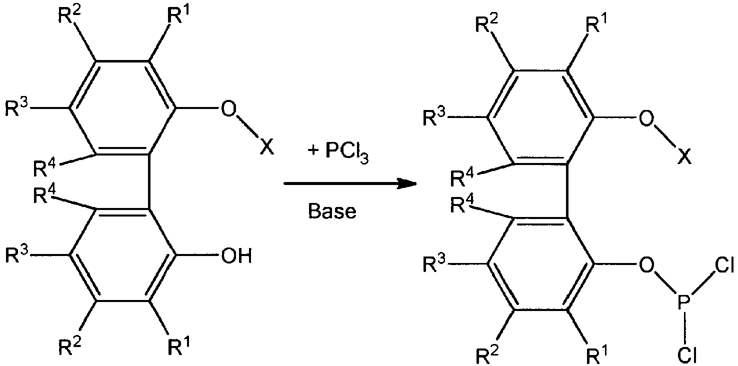
c2) 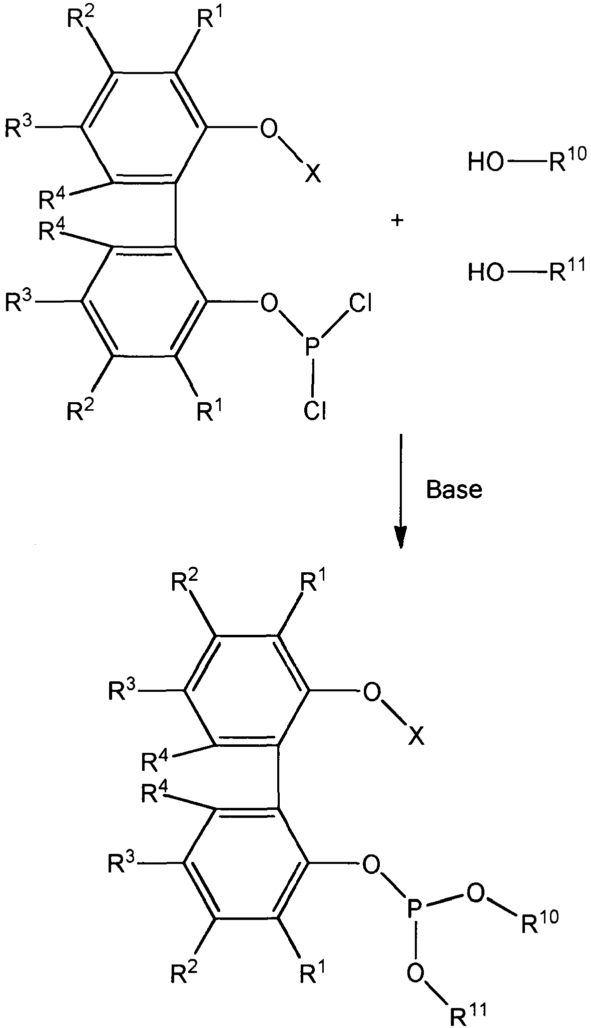 où
R¹, R², R³, R⁴ sont choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, halogène, COO-(C₁-C₁₂)-alkyle, CONH- (C₁-C₁₂)-alkyle, -(C₆-C₂₀)-aryl-CON[(C₁-C₁₂)-alkyle]₂, -CO-(C₁-C₁₂)-alkyle, -CO-(C₆-C₂₀)-aryle, -COOH, -OH, -SO₃H ; -SO₃Na, -NO₂, -CN, -NH₂ ; -N[(C₁-C₁₂)-alkyle]₂ ;
R¹⁰ et R¹¹ sont choisis, à chaque fois indépendamment l'un de l'autre, parmi : -(C₁-C₁₂)-alkyle, -(C₆-C₂₀)-aryle, -(C₆-C₂₀)-aryl-(C₁-C₁₂)-alkyle, -(C₆-C₂₀)-aryl-O-(C₁-C₁₂)-alkyle, - (C₁-C₁₂)-alkyl- (C₆-C₂₀)-aryle, -(C₆-C₂₀)-aryl-COO-(C₁-C₁₂)-alkyle, -(C₆-C₂₀)-aryl-CONH-(C₁-C₁₂)-alkyle, -(C₆-C₂₀)-aryl-CON[(C₁-C₁₂)-alkyle]₂, -(C₄-C₂₀)-hétéroaryle, -(C₄-C₂₀)-hétéroaryl-(C₁-C₁₂)-alkyle, -(C₅-C₈)-cycloalkyle, -(C₆-C₂₀)-aryl-CO-(C₆-C₂₀)-aryle,
X représente -COO-tert-butyle ;
et Y représente un contre-ion correspondant par rapport à X ;
un seul équivalent X-Y étant utilisé par rapport au diphénol.

4. Procédé selon la revendication 3, comprenant les étapes de procédé :
a) 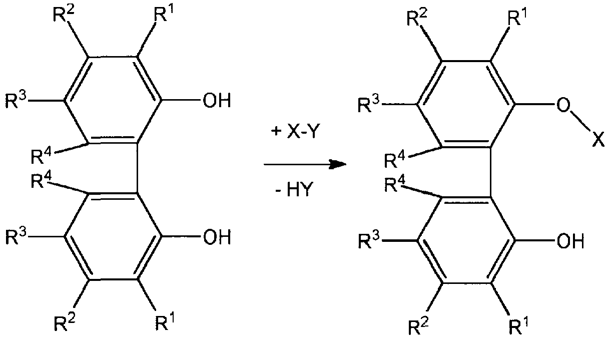
b2) 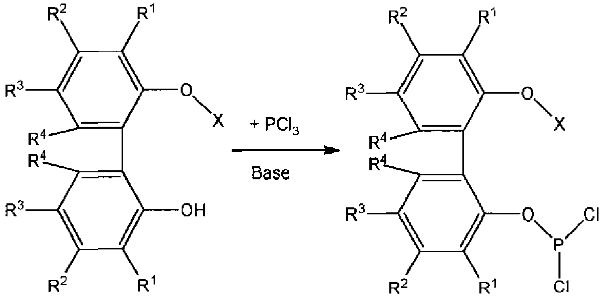
c2') 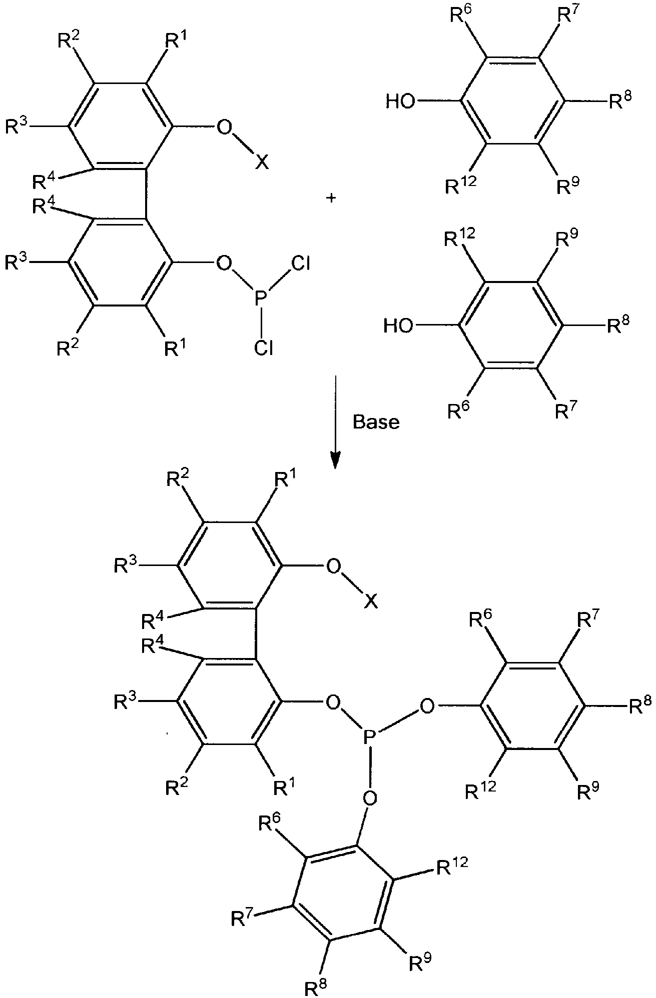 où : -H, -(C₁-C₁₂)-alkyle, -O-(C₁-C₁₂)-alkyle, -O-(C₆-C₂₀)-aryle, -(C₆-C₂₀)-aryle, halogène (tel que Cl, F, Br, I), COO-(C₁-C₁₂)-alkyle, CONH- (C₁-C₁₂)-alkyle, -(C₆-C₂₀)-aryl-CON[(C₁-C₁₂)-alkyle]₂, -CO-(C₁-C₁₂)-alkyle, -CO-(C₆-C₂₀)-aryle, -COOH, -OH, -SO₃H ; -SO₃Na, -NO₂, -CN, -NH₂ ; -N[( C₁-C₁₂)-alkyle]₂ ;
R⁶, R⁷, R⁸, R⁹, R¹² sont choisis, à chaque fois indépendamment les uns des autres, parmi : H, -(C₁-C₁₂)-alkyle, -O-(C₁-C₁₂)-alkyle, -O-(C₆-C₂₀)-aryle, -(C₆-C₂₀)-aryle, halogène, -SO₃H ; -SO₃Na, -NH₂; -N[(C₁-C₁₂)-alkyle]₂.

5. Procédé comprenant les étapes de procédé :
a) 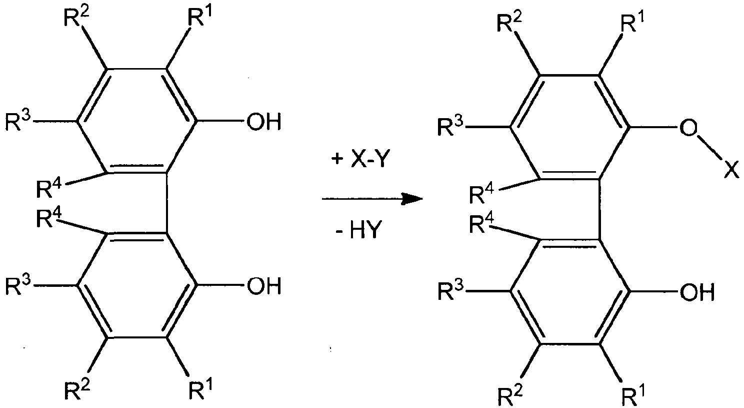
b3) 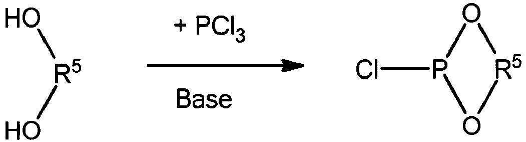
c3) 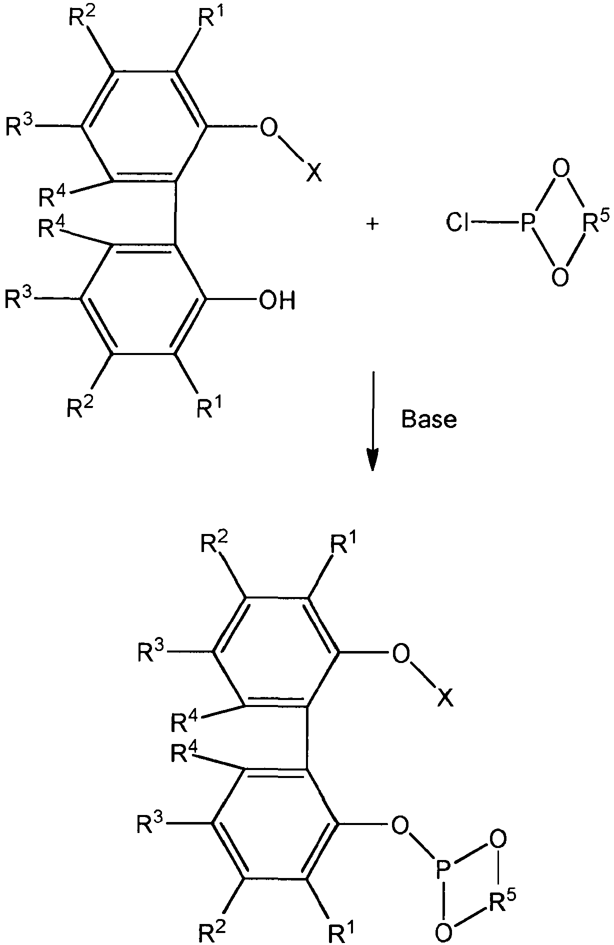 où
R¹, R², R³, R⁴ sont choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, halogène, COO-(C₁-C₁₂)-alkyle, CONH- (C₁-C₁₂)-alkyle, -(C₆-C₂₀)-aryl-CON[(C₁-C₁₂)-alkyle] ₂, -CO-(C₁-C₁₂)-alkyle, -CO-(C₆-C₂₀)-aryle, -COOH, -OH, -SO₃H ; -SO₃Na, -NO₂, -CN, -NH₂ ; -N[(C₁-C₁₂)-alkyle]₂ ;
R⁵ est choisi parmi : -(C₁-C₁₂)-alkyl-, -(C₆-C₂₀)-aryl-, -(C₆-C₂₀)-aryl- (C₁-C₁₂)-alkyl-, -(C₁-C₁₂)-alkyl- (C₆-C₂₀)-aryl-, -(C₄-C₂₀)-hétéroaryl-, -(C₆-C₂₀)-aryl-CO-(C₆-C₂₀)-aryl- ;
X représente -COO-tert-butyle ;
et Y représente un contre-ion correspondant par rapport à X ;
un seul équivalent X-Y étant utilisé par rapport au diphénol.

6. Procédé selon la revendication 5, comprenant les étapes de procédé :
a) 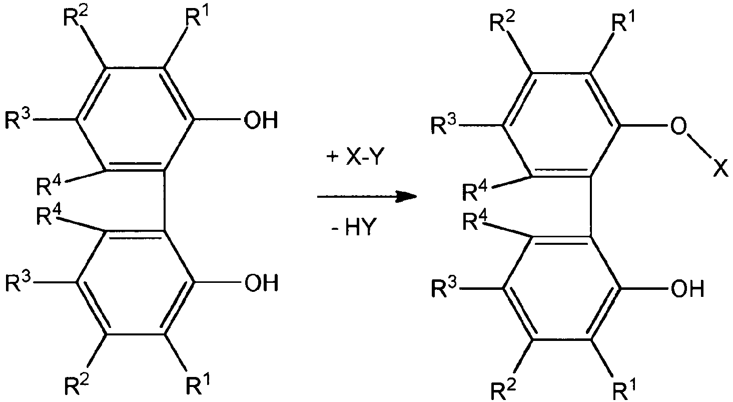
b3') 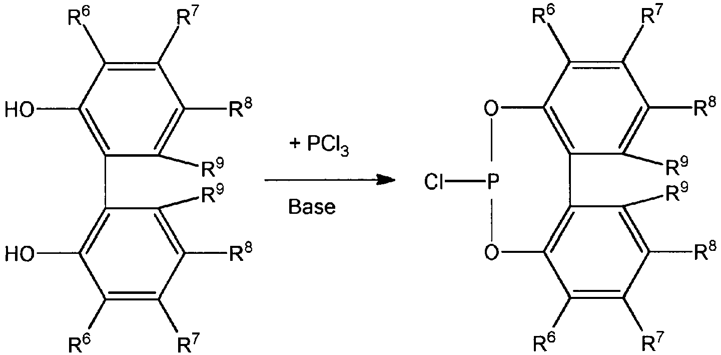
c3') 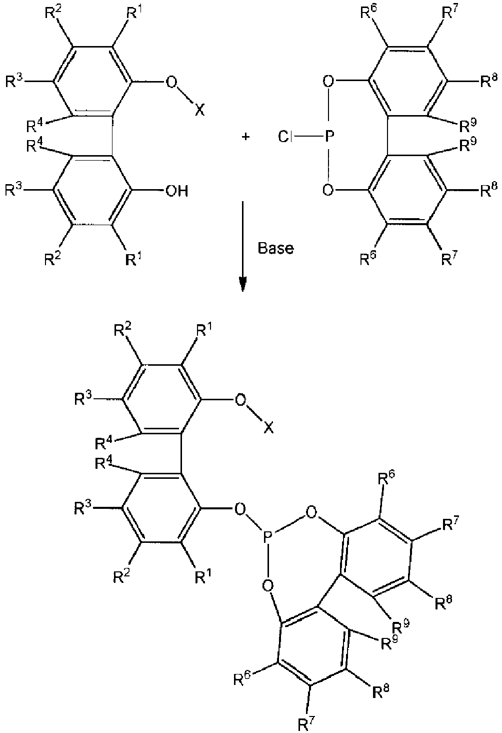 où
R⁶, R⁷, R⁸, R⁹ sont choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, halogène, COO-(C₁-C₁₂)-alkyle, CONH- (C₁-C₁₂)-alkyle, (C₆-C₂₀)-aryl-CON [(C₁-C₁₂)-alkyle]₂, -CO-(C₁-C₁₂)-alkyle, -CO-(C₆-C₂₀)-aryle, -COOH, -OH, -SO₃H ; -SO₃Na, -NO₂, -CN, -NH₂ ; -N[(C₁-C₁₂)-alkyle]₂.

7. Procédé selon l'une quelconque des revendications 1 à 6, la base étant choisie parmi : la triéthylamine, la dibutylamine, le diméthylaminobutane, la pyridine, la diméthylaminopyridine, la N-méthyl-2-pyrrolidone, le tert-butylate de potassium, le méthylate de sodium, le n-butyllithium.

8. Procédé selon l'une quelconque des revendications 1 à 7,
R¹, R², R³, R⁴ étant choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, -COO-(C₁-C₁₂)-alkyle, -CONH-(C₁-C₁₂)-alkyle, - (C₆-C₂₀)-aryl-CON [(C₁-C₁₂)-alkyle]₂, -CO-(C₁-C₁₂)-alkyle, -CO-(C₆-C₂₀)-aryle, -COOH, -OH, -NH₂, -N[(C₁-C₁₂)-alkyle]₂.

9. Procédé selon l'une quelconque des revendications 1 à 8,
R¹, R², R³, R⁴ étant choisis, à chaque fois indépendamment les uns des autres, parmi : -H, -(C₁-C₁₂)-alkyle, -O-(C₁-C₁₂)-alkyle, -(C₆-C₂₀)-aryle, -COO-(C₁-C₁₂)-alkyle, -N[(C₁-C₁₂)-alkyle]₂.

10. Procédé selon l'une quelconque des revendications 1 à 5,
R⁵ étant choisi parmi : -(C₁-C₁₂)-alkyl-, -(C₆-C₂₀)-aryl-, - (C₆-C₂₀)-aryl-(C₁-C₁₂)-alkyl-, -(C₆-C₂₀)-aryl-CO-(C₆-C₂₀)-aryl-, -(C₁-C₁₂)-alkyl- (C₆-C₂₀)-aryl-.

11. Procédé selon l'une quelconque des revendications 2 à 4,
R⁶, R⁷, R⁸, R⁹, R¹² étant choisis, à chaque fois indépendamment les uns des autres, parmi : -H, -(C₁-C₁₂)-alkyle, -O-(C₁-C₁₂)-alkyle, -O-(C₆-C₂₀)-aryle, -(C₆-C₂₀)-aryle, -COO-(C₁-C₁₂)-alkyle, -CONH-(C₁-C₁₂)-alkyle, - (C₆-C₂₀)-aryl-CON [(C₁-C₁₂)-alkyle]₂, -CO-(C₁-C₁₂)-alkyle, -CO-(C₆-C₂₀)-aryle, COOH, -OH, -NH₂, -N[(C₁-C₁₂)-alkyle]₂.

12. Procédé selon l'une quelconque des revendications 2 à 4,
R⁶, R⁷, R⁸, R⁹, R¹² étant choisis, à chaque fois indépendamment les uns des autres, parmi : -H, -(C₁-C₁₂)-alkyle, -O-(C₁-C₁₂)-alkyle.
